# EUROPEAN PATENT APPLICATION

(11) **EP 4 006 503 A1**
(43) Date of publication of application: **01.06.2022**
(21) Application number: 20846818.1
(22) Date of filing: 14.07.2020
(51) Int. Cl.: G01H 1/00

(54) **VIBROMETER AND VIBRATION DETECTION METHOD**

(30) Priority: 30.07.2019 JP 2019140013
(71) Applicant: Kyocera Corporation, Kyoto-shi Kyoto 612-8501 (JP)
(72) Inventor: SOEJIMA, Munetaka, Kyoto-shi, Kyoto 612-8501 (JP); TAKANAMI, Shun, Kyoto-shi, Kyoto 612-8501 (JP)
(74) Representative: TBK
(86) International application number: PCT/JP2020/027335
(87) International publication number: WO 2021/020103

(57) **Abstract**

Provided is a vibrometer capable of detecting vibration of a vibrator having a placement surface and vibrating horizontally in a predetermined direction. The vibrometer includes a revolving body and a gyroscope sensor. The revolving body has an outer surface including a curved surface that is curved outward when viewed in a direction along a predetermined axis. The revolving body is capable of rolling in the predetermined direction on the placement surface in such a manner that the curved surface comes into contact with the placement surface, with the predetermined axis forming an angle with the predetermined direction. The gyroscope sensor is fixed to the revolving body and is capable of determining the angular velocity around the predetermined axis. When viewed in the direction along the predetermined axis, the curved surface is shaped such that a portion of the curved surface at a greater distance along the curved surface from a reference portion within the curved surface is farther from the center of gravity of an assembly including the revolving body and members that roll together with the revolving body.

## Description

### Technical Field

The present disclosure relates to a vibrometer capable of detecting vibration and to a method for detecting vibration.

### Background Art

A known vibrometer detects vibration by determining physical quantities relevant to vibration (see PTL 1). The vibrometer includes, for example, a gyroscope sensor and determines physical quantities relevant to vibration on the basis of the angular velocity determined by the gyroscope sensor.

### Citation List

### Patent Literature

PTL 1: Japanese Unexamined Patent Application Publication No. 2019-056652

### Summary of Invention

An aspect of the present disclosure is a vibrometer capable of detecting vibration of a vibrator having a placement surface and vibrating horizontally in a predetermined direction. The vibrometer includes a revolving body and a gyroscope sensor. The revolving body has an outer surface including a curved surface that is curved outward when viewed in the direction along a predetermined axis. The revolving body is capable of rolling in the predetermined direction on the placement surface in such a manner that the curved surface comes into contact with the placement surface, with the predetermined axis forming an angle with the predetermined direction. The gyroscope sensor is fixed to the revolving body and is capable of determining the angular velocity around the predetermined axis. When viewed in the direction along the predetermined axis, the curved surface is shaped such that a portion of the curved surface at a greater distance along the curved surface from a reference portion within the curved surface is farther from the center of gravity of an assembly including the revolving body and members that roll together with the revolving body.

Another aspect of the present disclosure is a vibrometer including a supporter, a revolving body, a gyroscope sensor, and a stopper. The revolving body is supported by the supporter in a manner so as to be capable of revolving around a predetermined axis of revolution and is disposed in such a manner that an assembly including the revolving body and members that revolve together with the revolving body has a center of gravity located away from the predetermined axis of revolution when viewed in the direction along the predetermined axis of revolution. The gyroscope sensor is fixed to the revolving body and is capable of determining the angular velocity around the predetermined axis of revolution. The stopper limits the possible angular range of revolution of the revolving body to less than 135°.

Still another aspect of the present disclosure is a vibrometer including a supporter, a revolving body, a gyroscope sensor, a stopper part, and an arithmetic unit. The revolving body is supported by the supporter in a manner so as to be capable of revolving around a predetermined axis of revolution and is disposed in such a manner that an assembly including the revolving body and members that revolve together with the revolving body has a center of gravity located away from the predetermined axis of revolution when viewed in the direction along the predetermined axis of revolution. The gyroscope sensor is fixed to the revolving body and is capable of determining the angular velocity around the predetermined axis of revolution. The stopper part sets a limit to the possible angular range of revolution of the revolving body. The arithmetic unit calculates, from the angular velocity determined by the gyroscope sensor, the velocity at which a predetermined portion of the revolving body shifts in a predetermined direction. When viewed in the direction along the predetermined axis of revolution, the possible angular range is asymmetrical with respect to a straight line being orthogonal to the predetermined direction and passing through the predetermined axis of revolution.

Still another aspect of the present disclosure is a method for detecting vibration of a vibrator capable of vibrating in a vertical direction. The method includes fixing a vibrometer to the vibrator. The vibrometer includes a supporter, a revolving body, a gyroscope sensor, and a lower stopper part. The revolving body is supported by the supporter in a manner so as to be capable of revolving around a predetermined axis of revolution and is disposed in such a manner that an assembly including the revolving body and members that revolve together with the revolving body has a center of gravity located away from the predetermined axis of revolution when viewed in the direction along the predetermined axis of revolution. The gyroscope sensor is fixed to the revolving body and is capable of determining the angular velocity around the predetermined axis of revolution. The revolving body comes into contact with the lower stopper part when the revolving body revolves in such a manner that a tip of the revolving body shifts downward. The lower stopper is configured to keep the tip of the revolving body from reaching a site directly below the predetermined axis of revolution and to restrict revolution of the revolving body.

Still another aspect of the present disclosure is a vibrometer including a first elastic body, a revolving body, a second elastic body, and a gyroscope sensor. The first elastic body has a first end and a second end in the direction in which the first elastic body extends. The first elastic body between the first and second ends is wound in a helical shape. The revolving body is fixed to the second end of the first elastic body. The second elastic body has a third end and a fourth end in the direction in which the second elastic body extends. The third end is fixed the revolving body. The gyroscope sensor is fixed to the revolving body and is capable of determining the angular velocity around an axis of revolution extending in the direction from the first end toward the fourth end. The second elastic body between the third end and the fourth end is wound in a helical shape winding opposite in direction to the helical shape of the first elastic body. The fourth end of the second elastic body is capable of shifting relative to the first end of the first elastic body.

Still another aspect of the present disclosure is a vibrometer including a supporter, a revolving body, and a gyroscope sensor. The supporter is fixed to a vibrator. The revolving body is supported by the supporter. The gyroscope sensor is fixed to the revolving body and is capable of determining the angular velocity. The supporter has the flexibility of being able to bend in a vertical direction in a manner so as to cause the revolving body to revolve.

### Brief Description of Drawings

[Fig. 1] Fig. 1 is a sectional view of a vibrometer according to a first embodiment.
[Fig. 2] Fig. 2(a) illustrates a revolving body in a reference state, in which the revolving body is disposed upright on a placement surface. Fig. 2(b) illustrates the revolving body in a state in which a vibrator shifts rightward. Fig. 2(c) illustrates the revolving body in a state in which the vibrator shifts leftward.
[Fig. 3] Fig. 3 is an exploded perspective view of a detector illustrated in Fig. 1.
[Fig. 4] Fig. 4 is a sectional view of the detector taken along line IV-IV in Fig. 3.
[Fig. 5] Fig. 5(a) is a sectional view of a first gyroscope sensor taken along line Va-Va in Fig. 3, illustrating the relationship between the first gyroscope sensor and a controller. Fig. 5(b) is a sectional view of a second gyroscope sensor taken along line Vb-Vb in Fig. 3, illustrating the relationship between the second gyroscope sensor and the controller.
[Fig. 6] Fig. 6(a) illustrates a vibrator according to a second embodiment. Fig. 6(b) is a perspective view of a portion denoted by VIb in Fig. 6(a).
[Fig. 7] Fig. 7 is a sectional view of the vibrator taken along line VII-VII in Fig. 6.
[Fig. 8] Fig. 8(a) illustrates a revolving body in the reference state. Fig. 8(b) illustrates a state in which the revolving body revolves, with a supporter as the axis of revolution. Fig. 8(c) illustrates a state in which the revolving body is brought back into the reference state.
[Fig. 9] Fig. 9 is an exploded perspective view of a detector illustrated in Fig. 8.
[Fig. 10] Fig. 10 is a sectional view of a gyroscope sensor taken along line X-X in Fig. 9, illustrating the relationship between the gyroscope sensor and a controller.
[Fig. 11] Fig. 11 is a sectional view of a vibrometer according to a third embodiment.
[Fig. 12] Fig. 12(a) illustrates a revolving body in the reference state. Fig. 12(b) illustrates a state in which the revolving body revolves in a counterclockwise direction. Fig. 12(c) illustrates a state in which the revolving body revolves in a clockwise direction.
[Fig. 13] Fig. 13 is an exploded perspective view of a detector illustrated in Fig. 11.
[Fig. 14] Fig. 14 illustrates the relationship between a gyroscope sensor illustrated in Fig. 11 and a controller.
[Fig. 15] Fig. 15(a) is a sectional view of a vibrometer according to a fourth embodiment. Fig. 15(b) is an enlarged view of a section denoted by XV in Fig. 15(a).
[Fig. 16] Fig. 16(a) illustrates a revolving body in the reference state. Fig. 16(b) illustrates a state in which the revolving body revolves in a counterclockwise direction. Fig. 16(c) illustrates a state in which the revolving body revolves in a clockwise direction. Description of Embodiments

Hereinafter, the present disclosure will be described in detail by way of embodiments with reference to the accompanying drawings. The Cartesian coordinate system XYZ in each of the accompanying drawings is an absolute coordinate. The X axis and the Y axis orthogonally intersect at the origin point of the coordinate system and extend horizontally from the origin point. The Z axis extends vertically from the origin point.

The words front, rear, left, right, up, and down are as defined below and will be hereinafter used for the purpose of facilitating the understanding of the invention. The left-and-right direction is along the X axis, with the positive side of the X axis being located on the right side. The front-and-rear direction is along the Y axis, with the positive side of the Y axis being located on the front side. The up-and-down direction is along the vertical direction. The expression "a direction along a predetermined direction" may imply that the direction concerned is parallel to the predetermined direction. The same applies to the following description.

### First Embodiment

### Vibrometer

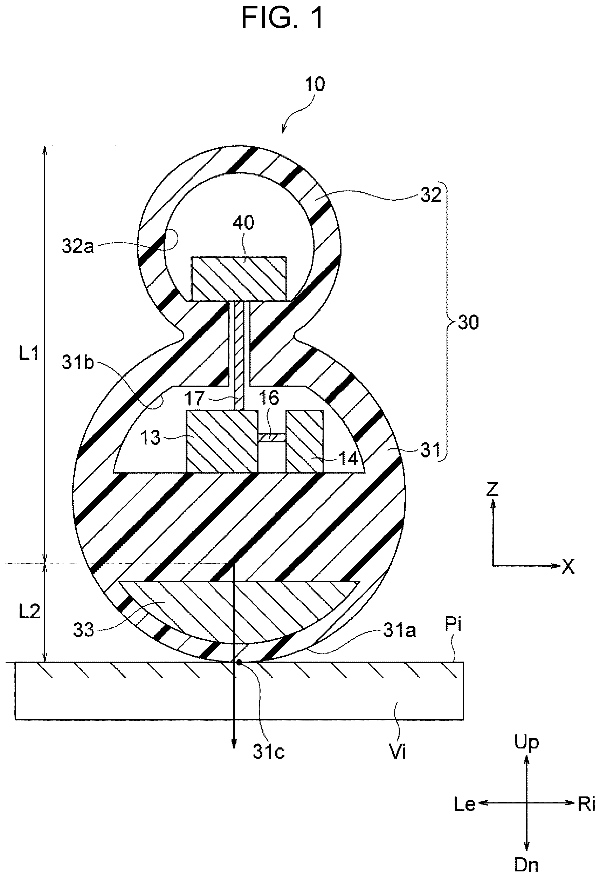

Refer to Fig. 1. Fig. 1 illustrates a vibrometer 10, which is placed on a placement surface Pi of a vibrator Vi, which vibrates mainly in a horizontal direction (a predetermined direction). The vibrometer 10 (see Fig. 1) is capable of determining physical quantities (displacement, velocity, acceleration, and/or jerk) of the vibrator Vi vibrating in the horizontal direction. The physical quantities determined by the vibrometer 10 are input to, for example, an external apparatus and is displayed on a display screen or the like of the external apparatus. Alternatively, the physical quantities determined by the vibrometer 10 may be displayed on a display screen or the like of the vibrometer 10. In this way, the information about the vibration of the vibrator Vi is provided to a person conducting measurement.

The vibrometer 10 may have desired dimensions. The height (the dimension in the up-and-down direction) of the vibrometer 10 may be greater than or equal to 10 mm, greater than or equal to 50 mm, greater than or equal to 100 mm, or greater than or equal to 500 mm. The height of the vibrometer 10 may be less than or equal to 10 mm. The width (the dimension in the left-and-right direction) and the depth (the dimension in the front-and-rear direction) of the vibrometer 10 each may be greater than or equal to 5 mm, greater than or equal to 25 mm, greater than or equal to 50 mm, or greater than or equal to 250 mm. The width of the vibrometer 10 may be less than or equal to 250 mm.

The vibrometer 10 (see Fig. 1) includes a revolving body 30, a detector 40, a controller 13, and a wireless communicator 14. The revolving body 30 is placed on the placement surface Pi of the vibrator Vi. The detector 40 is fixed to the revolving body 30 and is capable of determining the angular velocity. The controller 13 controls the detector 40 and obtains, by calculation, information about the vibrator Vi on the basis of the angular velocity determined by the detector 40. The wireless communicator 14 is capable of transmitting, to the outside, the information obtained by the controller 13, that is, the information about the vibrator Vi.

### Revolving Body

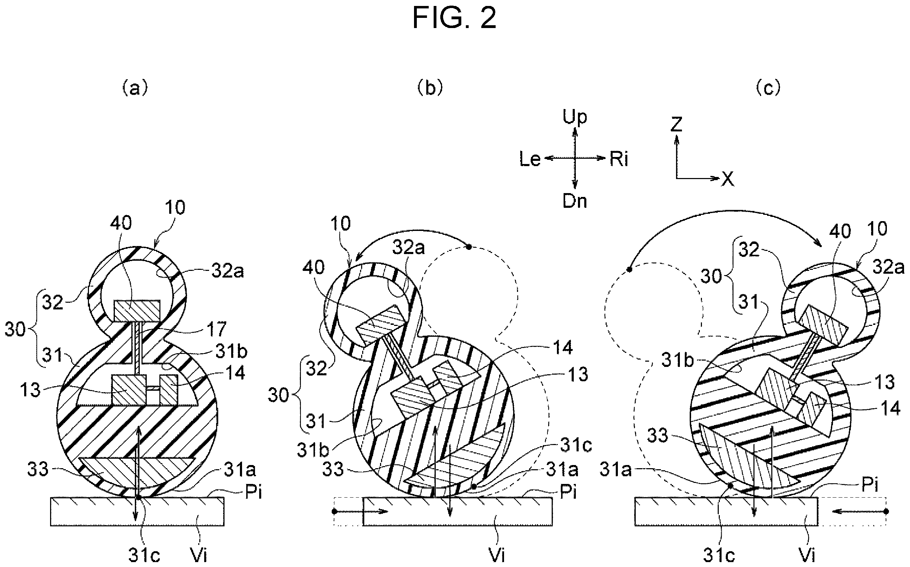

Refer to Fig. 2(a). The revolving body 30 has a curved surface, where a lower surface 31a of the revolving body 30 is curved (so as to protrude) outward. The revolving body 30 is disposed upright in such a manner that part of the curved surface (hereinafter referred to as a reference portion 31c) is in contact with the placement surface Pi. The lower surface 31a in the example illustrated in the drawings is entirely curved and is hereinafter also referred to as a curved surface 31a. The revolving body 30 disposed upright on the placement surface Pi is in a reference state. Refer also to Fig. 2(b). When the vibrator Vi shifts rightward, an inertial force in a leftward direction acts on the vibrometer 10, which in turn rolls leftward (revolves counterclockwise). When the revolving body 30 rolls leftward, the reference portion 31c shifts away from the placement surface Pi, and a region being part of the revolving body 30 (the curved surface 31a) and located outside the reference portion 31c comes into contact with the placement surface Pi. Refer also to Fig. 2(c). When the vibrator Vi shifts leftward, an inertial force in a rightward direction acts on the vibrometer 10, which in turn rolls rightward (revolves clockwise). When the revolving body 30 rolls rightward, the reference portion 31c shifts away from the placement surface Pi, and a region being part of the revolving body 30 and located outside the reference portion 31c comes into contact with the placement surface Pi. The revolving body 30 continuously rolls rightward and leftward such that the revolving body 30 revolves clockwise and counterclockwise around the Y axis. This motion is detected to obtain information about vibration of the vibrator Vi in the horizontal direction.

The axis of revolution (hereinafter also referred to as a predetermined axis) for the rolling motion of the revolving body 30 may extend in any desired direction. For example, the predetermined axis may extend in the X-axis direction or may extend in a direction having a component in the X-axis direction and a component in the Y-axis direction. The revolving body 30 is placed (supported) on the placement surface Pi (the vibrator Vi) in a manner so as to be capable of rolling in the direction of vibration of the vibrator Vi.

Refer to Fig. 1. The revolving body 30 has the curved surface 31a, where at least the lower surface 31a is curved outward when viewed in the direction along the predetermined axis (the axis of revolution for the rolling motion of the revolving body 30). In other respects, the shape of the lower surface 31a of the revolving body 30 is not limited. The lower surface 31a of the revolving body 30 in the example illustrated in Fig. 1 is hemispherical. Alternatively, the lower surface 31a of the revolving body 30 may be semielliptical or may be in the shape of a semicircular column. In a case in which the lower surface 31a is hemispherical, the revolving body 30 can revolve around the X axis and the Y axis with no change in the orientation of the revolving body 30. In a case in which the lower surface 31a is in the shape of a semicircular column, the revolving body 30 can revolve around the X axis only or can revolve around the Y axis only. The lower surface of the revolving body 30 may include a region of constant curvature and a region of inconstant curvature.
For example, at least part of the curved surface 31a including the reference portion 31c may be a region of constant curvature when viewed in the direction along the axis of revolution of the revolving body 30. The curvature of the curved surface 31a may be constant only in the portion that comes into contact with the placement surface Pi when the revolving body 30 rolls. The curvature of the other portion of the curved surface 31a may be varied.

Some regions of the outer surface of the revolving body 30 come into contact with the placement surface Pi when the revolving body 30 rolls due to vibration, and all of these regions may be referred to as the lower surface 31a of the revolving body 30. Alternatively, the entirety of a region that is part of the outer surface and that is curved downward when viewed in the direction along the axis of revolution for the rolling motion of the revolving body 30 may be referred to as the lower surface 31a of the revolving body 30.

Refer back to Fig. 2. As described above, when the vibrator Vi vibrates in the horizontal direction, an inertial force acts on the revolving body 30, which in turn rolls in such a manner that the reference portion 31c of the revolving body 30 shifts away from the placement surface Pi, and a region being part of the curved surface and located outside the reference portion 31c comes into contact with the placement surface Pi. That is, the revolving body 30 disclosed herein is shaped so as to be capable of rolling on the placement surface Pi in the direction of vibration of the vibrator Vi in such a manner that the curved surface 31a comes into contact with the placement surface Pi, with the axis of revolution of the revolving body 30 forming an angle with the direction of vibration of the vibrator Vi. The curved surface 31a (the lower surface 31a) of the revolving body 30 disclosed herein is also shaped such that a portion of the curved surface 31a at a greater distance along the curved surface 31a from the reference portion 31c is farther from the center of gravity of the vibrometer 10 or, more specifically, from the center of gravity of the assembly including the revolving body 30 and the members that roll together with the revolving body 30.

Refer to Fig. 1. The revolving body 30 in the example illustrated in Fig. 1 includes a first part 31, a second part 32, and a heavy object 33. The first part 31 comes into contact with the placement surface Pi. The second part 32 is joined to an upper portion of the first part 31. The heavy object 33 is a weight disposed within the first part 31.

The first part 31 may have any desired shape. For example, the first part 31 may be spherical, hemispherical, ellipsoidal, or semiellipsoidal or may be in the shape of a circular or semicircular column.

The dimensional ratio of the first part 31 to the second part 32 may be arbitrarily determined. For example, the size of the first part 31 may be greater than or equal to 1.2 times the size of the second part 32, greater than or equal to 1.5 times the size of the second part 32, greater than or equal to 2 times the size of the second part 32, or greater than or equal to 3 times the size of the second part 32. The size of the first part 31 may be less than or equal to 1.2 times the size of the second part 32.

The first part 31 may be made of any desired material. The first part 31 may be made of wood, resin, metal, or a ceramic material. Using resin as the material of the revolving body 30 is advantageous in that the heavy object 33 can be easily formed in the revolving body 30 by, for example, insert molding. The heavy object 33 will be described later. The first part 31 may be made of a ceramic material or metal.

The first part 31 includes a lower surface portion that is the lower surface 31a of the revolving body 30. The lower surface portion may thus be regarded as a bottom surface of the revolving body 30. The first part 31 (see Fig. 1) has a first housing cavity 31b, in which the wireless communicator 14 and the controller 13 are disposed. The first housing cavity 31b in the first part 31 may be closed with a cover or the like in such a manner that the wireless communicator 14 and the controller 13 are hidden from external view.

The second part 32 may have any desired shape. For example, the second part 32 may be spherical or ellipsoidal or may be in the shape of a circular column or a cube. The second part 32 may be made of any desired material. For example, the first part 31 and the second part 32 may be made of the same material.

The second part 32 (see Fig. 1) has a second housing cavity 32a, in which a substrate 42 and the detector 40 are disposed. The second housing cavity 32a is located above the midpoint of the revolving body 30 in the up-and-down direction. The second housing cavity 32a in the second part 32 may be closed with a cover or the like in such a manner that the detector 40 is hidden from external view.

The proportion of the size of the second housing cavity 32a in the second part 32 may be arbitrarily determined. The proportion of the size of the second housing cavity 32a in the second part 32 may be greater than or equal to 20%, greater than or equal to 40%, greater than or equal to 60%, or greater than or equal to 80%. The proportion of the size of the second housing cavity 32a in the second part 32 may be less than or equal to 20%.

The heavy object 33 may have any desired shape. For example, the heavy object 33 is hemispherical. The heavy object 33 may be made of any desired material. For example, the heavy object 33 is made of metal, and the mass per unit volume of the material of the heavy object 33 is greater than that of the material of the first part 31 and that of the material of the second part 32. Examples of metal that may be used as the material of the heavy object 33 include brass (an alloy of copper and zinc), iron, aluminum, tungsten, and lead.

The dimensional ratio of the heavy object 33 to the first part 31 (the proportion of the size of the heavy object 33 in the first part 31) may be arbitrarily determined. The size of the heavy object 33 may be less than or equal to 1/2 of the size of the first part 31, less than or equal to 1/4 of the size of the heavy object 33, less than or equal to 1/8 of the size of the heavy object 33, or less than or equal to 1/16 of the size of the heavy object 33.

The heavy object 33 adjusts the position of the center of gravity of the vibrometer 10. The heavy object 33 is located below the midpoint of the revolving body 30 in the up-and-down direction. More specifically, the heavy object 33 is adjacent to the lower surface portion (the lower surface 31a) of the first part 31. The mass per unit volume of the material of the heavy object 33 is greater than that of the material of the revolving body 30. The center of gravity of the vibrometer 10 is brought downward accordingly. The center of gravity of the vibrometer 10 (see Fig. 1) is below the midpoint of the revolving body 30 in the up-and-down direction.

The size and the material of the heavy object 33 may be changed as appropriate to adjust the position of the center of gravity of the vibrometer 10. For example, the heavy object 33 may be increased in size or may be made of a material of higher density such that the center of gravity of the vibrometer 10 is brought downward even further. Alternatively, the heavy object 33 may be reduced in size or may be made of a material lighter in weight such that the center of the gravity of the vibrometer 10 is brought close to the midpoint of the vibrometer 10 in the up-and-down direction. The vibrometer 10 rolls at high speed or at low speed accordingly.

Adhesion between the heavy object 33 and the first part 31 may be achieved by the anchoring effect. The adhesion of the heavy object 33 to the first part 31 eliminates or reduces the possibility that the heavy object 33 will be displaced while the revolving body 30 revolves.

### Detector

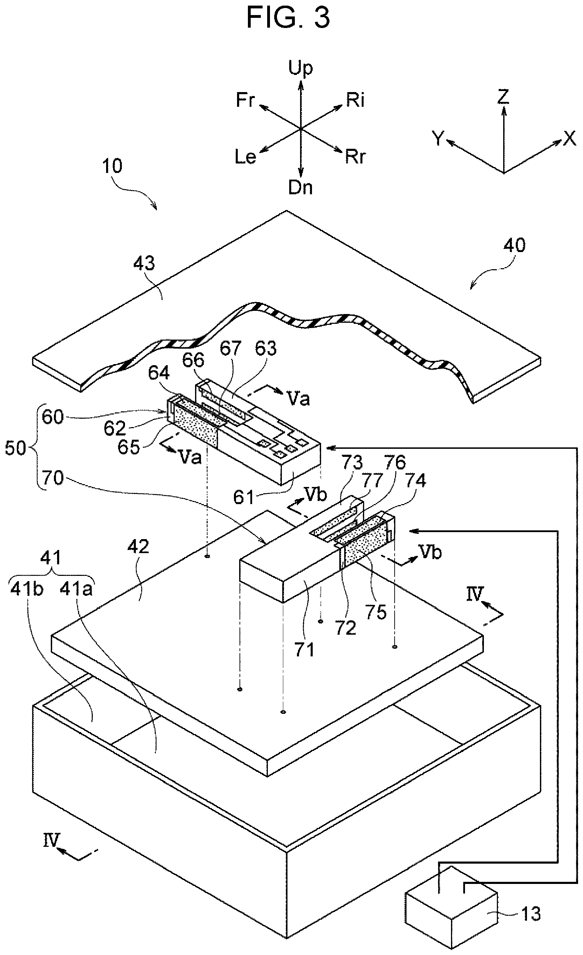

Refer to Figs. 2 and 3. The detector 40 (see Fig. 2) is disposed within the second part 32 (the revolving body 30) to determine the angular velocity around the predetermined axis. The predetermined axis may be the X axis, the Y axis, or a straight line that extends in a horizontal direction including an X-axis component and a Y-axis component. The detector 40 determines the angular velocity around the predetermined axis. The detector 40 outputs an electrical signal corresponding to the angular velocity, and the electrical signal is then input to the controller 13.

Refer to Fig. 1. The detector 40 is located above the midpoint of the revolving body 30 in the up-and-down direction. When viewed from another perspective, the detector 40 is farther than the midpoint of the revolving body 30 from the reference portion 31c, with the midpoint being located in the midsection of the revolving body 30 in the direction from the reference portion 31c toward the upper side in the reference state in which the reference portion 31c is in contact with the placement surface Pi. In some embodiments, the detector 40 may be located below the midpoint of the revolving body 30.

Refer to Fig. 3. The detector 40 in the example illustrated in Fig. 3 includes a case 41, the substrate 42, a gyroscope sensor 50, and a cover 43. The substrate 42 is disposed within the case 41. The gyroscope sensor 50 is mounted on the substrate 42 and is capable of determining the angular velocity. The gyroscope sensor 50 is covered with the cover 43.

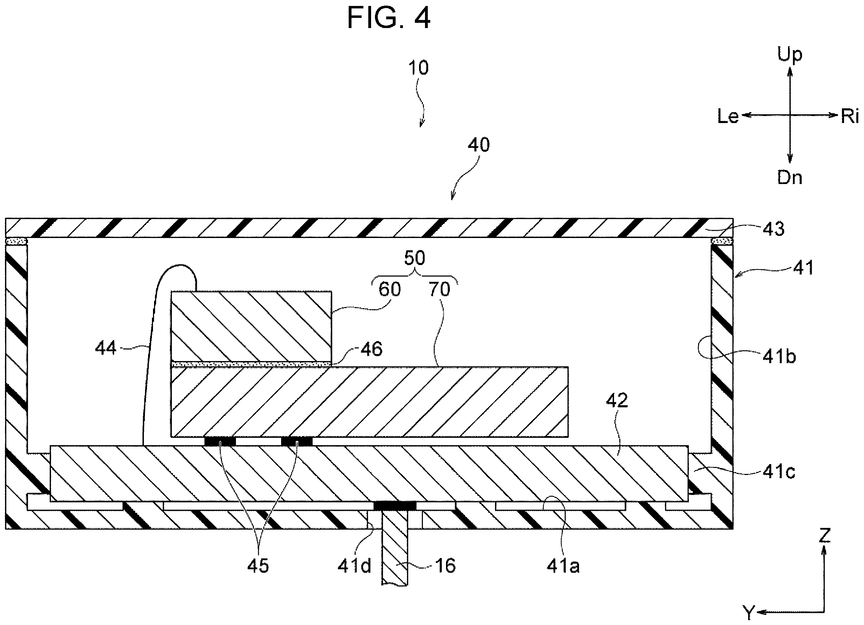

Refer to Fig. 4. The case 41 (see Fig. 4) includes protrusions 41c. Some of the protrusions 41c protrude from a bottom surface 41a of the case 41 toward the substrate 42, and the other protrusions 41c protrude from an inner surface 41b of the case 41 toward the substrate 42. The case 41 (see Fig. 4) has a case through-hole 41d, which is an opening defined in an outer surface of the case 41. An interconnection 16 extends through the case through-hole 41d to form a connection between the substrate 42 and the controller 13 in such a manner that electrical continuity between the substrate 42 and the controller 13 can be provided.

The substrate 42 includes an insulator and a wiring pattern formed inside and outside the insulator. Electric components (not illustrated) other than the gyroscope sensor 50 may also be mounted on the substrate 42. Examples of the electronic components include integrated circuits (ICs), transistors, and diodes.

The substrate 42 may have any desired shape. For example, the substrate 42 is in the shape of a flat plate. The substrate 42 (see Fig. 4) is fixed to the case 41 in a manner so as to fit over the protrusions 41c. Alternatively, the substrate 42 may be fixed to the case 41 with an adhesive. It is required that the adhesive be made of an organic material or an inorganic material and be electrically nonconductive.

### Gyroscope Sensor

Refer to Fig. 3. The gyroscope sensor 50 may be implemented in various forms. For example, the gyroscope sensor 50 may be implemented in a well-known configuration such as the one disclosed in Japanese Unexamined Patent Application Publication No. 2016-133428. The following describes an example of the gyroscope sensor 50. The gyroscope sensor 50 (see Fig. 3) is a vibratory gyroscope sensor equipped with micro-electro-mechanical systems (MEMS) and is capable of determining the angular velocity of revolution associated with the rolling motion of the revolving body 30. In other words, the gyroscope sensor 50 is capable of determining the angular velocity around the predetermined axis of the revolving body 30. The predetermined axis may be the X axis, the Y axis, or a straight line that extends in a direction including an X-axis component and a Y-axis component. The predetermined direction extends horizontally.

The gyroscope sensor 50 in the example illustrated in Fig. 3 includes a first gyroscope sensor 60 and a second gyroscope sensor 70. The first gyroscope sensor 60 is capable of determining the angular velocity around the Y axis. The second gyroscope sensor 70 is capable of determining the angular velocity around the X axis. The first gyroscope sensor 60, the second gyroscope sensor 70, and the controller 13 will be described below in this order. The relationship between the first gyroscope sensor 60 and the controller 13 and the relationship between the second gyroscope sensor 70 and the controller 13 will be described thereafter.

### First Gyroscope Sensor

Refer to Fig. 4. The first gyroscope sensor 60 (see Fig. 4) is bonded to an upper surface of the second gyroscope sensor 70 with an adhesive 46. It is required that the adhesive 46 used to bond the first gyroscope sensor 60 be made of an organic material or an inorganic material and be electrically nonconductive.

The first gyroscope sensor 60 (see Fig. 4) is electrically connected to the substrate 42 with a wire 44 therebetween. The wire 44 is made of a material including metal. An upper end and a lower end of the wire 44 are bonded respectively to the first gyroscope sensor 60 and the substrate 42 with a bonding material that is electrically conductive. The first gyroscope sensor 60 is connected to the wiring pattern of the substrate 42 in such a manner that electrical continuity between the first gyroscope sensor 60 and the controller 13 (see Fig. 3) can be provided.

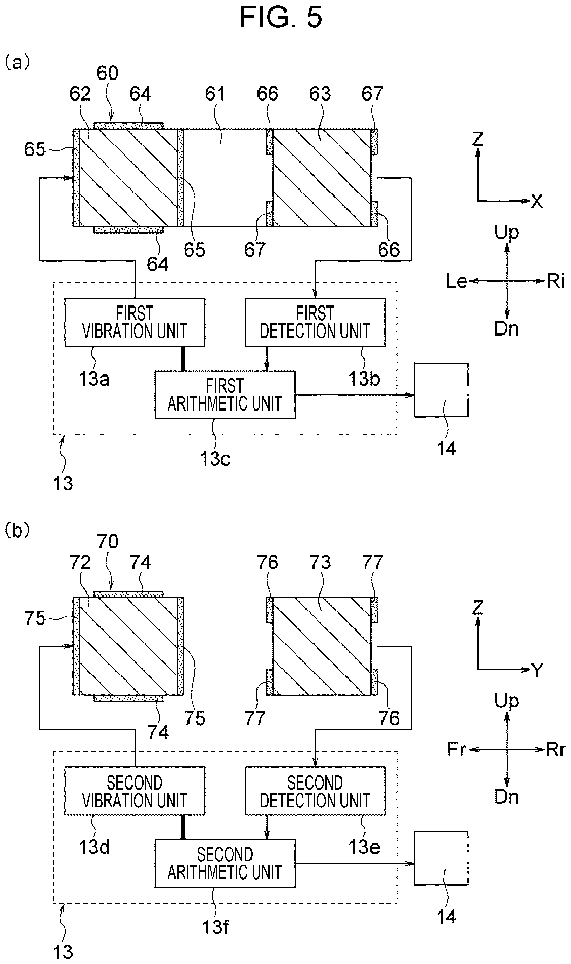

Refer to Figs. 3 and 5(a). The first gyroscope sensor 60 (see Fig. 3) includes a first base 61, a first vibration arm 62, a first detection arm 63, first vibration electrodes 64 and 65 (see Fig. 5(a)), and first detection electrodes 66 and 67 (see Fig. 5(a)). The first vibration arm 62 protrudes (frontward) from the first base 61 in the Y-axis direction. The first detection arm 63 protrudes from the first base 61 in the Y-axis direction along the first vibration arm 62. The first vibration electrodes 64 and 65 are disposed on the first vibration arm 62. The first detection electrodes 66 and 67 are disposed on the first detection arm 63.

The first base 61 is joined to the first vibration arm 62 and the first detection arm 63. The first base 61, the first vibration arm 62, and the first detection arm 63 constitute a piezoelectric body. The first base 61 may have any desired shape. The first base 61 in the example illustrated in Fig. 3 is in the shape of a cube. Alternatively, the first base 61 may, for example, in the shape of a circular column.

The first base 61 (see Fig. 3) is partially in contact with the upper surface of the second gyroscope sensor 70 (with the adhesive 46 therebetween). The other part of the first base 61 extends away from the upper surface of the second gyroscope sensor 70. When viewed from another perspective, a front portion of the first base 61 is located away from the second gyroscope sensor 70.

The first vibration arm 62 and the first detection arm 63 protrude from a side surface on the front side of the first base 61 and are located away from the second gyroscope sensor 70. The first vibration arm 62 and the first detection arm 63 are located away from the substrate 42 (away from the electronic components mounted on the substrate 42).

The first vibration arm 62 and the first detection arm 63 each may have any desired shape. For example, the first vibration arm 62 and the second vibration arm 72 each may be in the shape of a cube or a circular cylinder. The shape of the first vibration arm 62 may be different from the shape of the first detection arm 63.

Refer to Fig. 5(a). The first vibration electrodes 64 (see Fig. 5(a)) are disposed on an upper surface and a lower surface, respectively, of the first vibration arm 62. The first vibration electrodes 65 (see Fig. 5(a)) are disposed on side surfaces of the first vibration arm 62 that are located on the respective sides in the X-axis direction (the left-and-right direction). The first vibration electrodes 64 and 65 each extend in the Y-axis direction (the front-and-rear direction). The width of each first vibration electrode 64 is less than the width of each first vibration electrode 65. The first vibration electrodes 64 are each located away from the first vibration electrodes 65 and are not in contact with the first vibration electrodes 65.

The first detection electrodes 66 and 67 (see Fig. 5(a)) are disposed on side surfaces of the first detection arm 63 that are located on the respective sides in the X-axis direction. One of the first detection electrodes 66 is disposed on an upper portion of a left side surface of the first detection arm 63, and the other first detection electrode 66 is disposed on a lower portion of a right side surface of the first detection arm 63. One of the first detection electrodes 67 is disposed on a lower portion of the left side surface of the first detection arm 63, and the other first detection electrode 67 is disposed on an upper portion of the right side surface of the first detection arm 63. The first detection electrodes 66 and 67 are connected to the controller 13 (see Fig. 3) with the interconnection 16 (see Fig. 4) and the substrate 42 therebetween in such a manner that electrical continuity between the controller 13 and each of the first detection electrodes can be provided. The first detection electrodes 66 are each located away from the first detection electrodes 67 and are not in contact with the first detection electrodes 67.

### Second Gyroscope Sensor

Refer to Fig. 4. The second gyroscope sensor 70 (see Fig. 4) is electrically connected to the substrate 42 with bumps 45 therebetween. The bumps 45 are electrically conductive. The second gyroscope sensor 70 is electrically connected to the controller 13 with the substrate 42 therebetween. Together with the first gyroscope sensor 60, the second gyroscope sensor 70 is fixed to the revolving body 30.

Refer to Figs. 3 and 5(b). The second gyroscope sensor 70 (see Fig. 3) includes a second base 71, a second vibration arm 72, a second detection arm 73, second vibration electrodes 74 and 75 (see Fig. 5(b)), and second detection electrodes 76 and 77 (see Fig. 5(b)). The second vibration arm 72 protrudes (rightward) from the second base 71 in the X-axis direction. The second detection arm 73 protrudes from the second base 71 in the X-axis direction along the second vibration arm 72. The second vibration electrodes 74 and 75 are disposed on the second vibration arm 72. The second detection electrodes 76 and 77 are disposed on the second detection arm 73.

The second base 71 is joined to the second vibration arm 72 and the second detection arm 73. The second base 71, the second vibration arm 72, and the second detection arm 73 constitute a piezoelectric body. The second base 71 may have any desired shape. For example, the second base 71 may be geometrically identical to the first base 61.

Refer to Figs. 3 and 4. In the example illustrated in Fig. 4, the bumps 45 are disposed between a lower surface of the second base 71 and the substrate 42. The second base 71 is located away from the substrate 42 (away from the electronic components mounted on the substrate 42). The second base 71 is partially in contact with a lower surface of the first gyroscope sensor 60 (with the adhesive 46 therebetween). The other part of the second base 71 extends away from the lower surface of the first gyroscope sensor 60. A right portion of the second base 71 is located away from the first gyroscope sensor 60.

The second vibration arm 72 and the second detection arm 73 each protrude laterally from a right side surface of the second base 71 and are located away from the first gyroscope sensor 60 and the substrate 42 (away from the components disposed on the substrate 42). The second vibration arm 72 and the second detection arm 73 may be geometrically identical to the first vibration arm 62 and the first detection arm 63 or each may have any desired shape. In the present embodiment, the second vibration arm 72 and the second detection arm 73 have much in common with the first vibration arm 62 and the first detection arm 63 in terms of shape, and their shapes will not be further elaborated here.

Refer to Figs. 3 and 5(b). The second vibration electrodes 74 are disposed on the respective sides in the Z-axis direction or, more specifically, on an upper surface and a lower surface, respectively, of the second vibration arm 72. The second vibration electrodes 75 are disposed on the respective sides in the Y-axis direction (the front-and-rear direction) or, more specifically, on side surfaces of the second vibration arm 72. The second vibration electrodes 74 and 75 each extend in the X-axis direction (the left-and-right direction). The width (the dimension in the X-axis direction) of second vibration electrode 74 is less than the width (the dimension in the Z-axis direction) of each second vibration electrode 75. The second vibration electrodes 74 are each located away from the second vibration electrodes 75 and are not in contact with the second vibration electrodes 75.

The second detection electrodes 76 and 77 are disposed on side surfaces of the second detection arm 73 that are located on the respective sides in the Y-axis direction. One of the second detection electrodes 76 is disposed on an upper portion of a front side surface of the second detection arm 73, and the other second detection electrode 76 is disposed on a lower portion of a rear side surface of the second detection arm 73. One of the second detection electrodes 77 is disposed on a lower portion of the front side surface of the second detection arm 73, and the other second detection electrode 77 is disposed on an upper portion of the rear side surface of the second detection arm 73. The second detection electrodes 76 and 77 are connected to the controller 13 with the interconnection 16 (see Fig. 4) therebetween in such a manner that electrical continuity between the controller 13 and each of the second detection electrodes can be provided. The second detection electrodes 76 are each located away from the second detection electrodes 77 and are not in contact with the second detection electrodes 77.

### Controller

Refer to Figs. 1 and 3. The controller 13 is electrically connected to the detector 40 (the first gyroscope sensor 60 and the second gyroscope sensor 70) with the interconnection 16 and the substrate 42 therebetween. More specifically, the controller 13 is connected to the first vibration electrodes 64 and 65, the first detection electrodes 66 and 67, the second vibration electrodes 74 and 75, and the second detection electrodes 76 and 77 in such a manner that electrical continuity between the controller 13 and each of these electrodes can be provided.

The controller 13 includes, for example, a computer. The computer configured to act as the controller 13 includes, for example, a central processing unit (CPU), random-access memory (RAM), read-only memory (ROM), and an external storage device. The CPU executes programs stored in the ROM and/or programs stored in the external storage device such that the controller 13 can perform various functions. The controller 13 performs these functions to control the detector 40 (the first gyroscope sensor 60 and the second gyroscope sensor 70) and to obtain, by calculation, information about vibration on the basis of an electrical signal input to the controller 13 by the detector 40.

Refer to Fig. 5(a). The controller 13 includes, for example, a first vibration unit 13a, a first detection unit 13b, and a first arithmetic unit 13c. The first vibration unit 13a applies voltage to the first vibration electrodes 64 and 65. When energized with the voltage applied by the first vibration unit 13a, the first gyroscope sensor 60 (the first detection arm 63) outputs an electrical signal, which is then detected by the first detection unit 13b. The first arithmetic unit 13c obtains, by calculation, information about vibration (of the vibrator Vi (see Fig. 1)) on the basis of the electrical signal detected by the first detection unit 13b. Refer also to Fig. 5(b). The controller 13 also includes a second vibration unit 13d, a second detection unit 13e, and a second arithmetic unit 13f. The second vibration unit 13d applies voltage to the second vibration electrodes 74 and 75. When energized with the voltage applied by the second vibration unit 13d, the second gyroscope sensor 70 (the second detection arm 73) outputs an electrical signal, which is then detected by the second detection unit 13e. The second arithmetic unit 13f obtains, by calculation, information about vibration (of the vibrator Vi (see Fig. 1)) on the basis of the electrical signal detected by the second detection unit 13e.

Refer to Fig. 5(a). The first vibration unit 13a applies alternating voltage between each of the first vibration electrodes 64 on the upper and lower surfaces of the first vibration arm 62 and each of the first vibration electrodes 65 on the left and right side surfaces of the first vibration arm 62. Upon application of voltage, the first vibration arm 62 vibrates in the X-axis direction, and the vibration of the first vibration arm 62 is transferred to the first detection arm 63 (a piezoelectric body) through the first base 61. When being transferred to the first detection arm 63, the vibration in the X-axis direction causes the first detection arm 63 to vibrate in the X-axis direction.

Then, a Coriolis force acts on the first detection arm 63 such that the electrical signal output by the first detection arm 63 is input to the first detection unit 13b. This will be described later in detail. The first detection unit 13b obtains information about the revolving body 30 on the basis of an electrical signal input to the first detection unit 13b. More specifically, the first detection unit 13b obtains information about revolution of the revolving body 30 or, more specifically, the speed of revolution around the Y axis (the angular velocity) and the direction of revolution.

The first arithmetic unit 13c obtains, by calculation, information about vibration of the vibrator Vi (see Fig. 1)) on the basis of the information input to the first arithmetic unit 13c by the first detection unit 13b. The first arithmetic unit 13c may obtain, by calculation, information about vibration of the vibrator Vi on the basis of the magnitude of the alternating voltage applied by the first vibration unit 13a and the information input to the first arithmetic unit 13c by the first detection unit 13b. The information about vibration include physical quantities (displacement, velocity, acceleration, and/or jerk) relevant to vibration. The first arithmetic unit 13c is capable of inputting information including the determined physical quantities to the wireless communicator 14 through an interconnection 17 (see Fig. 1).

Refer to Fig. 5(b). The second vibration unit 13d applies alternating voltage between each of the second vibration electrodes 74 on the upper and lower surfaces of the second vibration arm 72 and each of the second vibration electrodes 75 on the front and rear side surfaces of the second vibration arm 72. Upon application of voltage, the second vibration arm 72 vibrates in the Y-axis direction, and the vibration of the second vibration arm 72 is transferred to the second detection arm 73 (a piezoelectric body) through the second base 71 (see Fig. 3) and causes the second detection arm 73 to vibrate in the Y-axial direction.

Then, a Coriolis force acts on the second detection arm 73 such that the electrical signal output by the second detection arm 73 is input to the second detection unit 13e. The second detection unit 13e obtains information about revolution of the revolving body 30 or, more specifically, the speed of revolution around the X axis (the angular velocity of the revolving body 30) and the direction of revolution around the X axis on the basis of an electrical signal input to the second detection unit 13e.

The second arithmetic unit 13f obtains, by calculation, information about vibration of the vibrator Vi (see Fig. 1) on the basis of the information input to the second arithmetic unit 13f by the second detection unit 13e. The second arithmetic unit 13f may obtain, by calculation, information about vibration of the vibrator Vi on the basis of the magnitude of the alternating voltage applied by the second vibration unit 13d and the information input to the second arithmetic unit 13f by the second detection unit 13e. The information about vibration include physical quantities (displacement, velocity, acceleration, and/or jerk) relevant to vibration. The first arithmetic unit 13c is capable of inputting information including the determined physical quantities to the wireless communicator 14.

Refer to Figs. 5(a) and 5(b). The first arithmetic unit 13c may compile the information obtained by calculation by the second arithmetic unit 13f (the information about vibration of the vibrator Vi in the front-and-rear direction) and the information obtained by calculation by the first arithmetic unit 13c (the information about vibration of the vibrator Vi in the left-and-right direction) and may then input the compilation of information to the wireless communicator 14. Alternatively, the second arithmetic unit 13f may compile these pieces of information and may input the compilation of information to the wireless communicator 14. In some embodiments, the first arithmetic unit 13c and the second arithmetic unit 13f may be integrated into one arithmetic unit and may be indistinguishable from each other.

### Relationship between Gyroscope Sensor and Controller

Refer to Figs. 2, 5(a), and 5(b). The controller 13 includes the first vibration unit 13a and the second vibration unit 13d. The first vibration unit 13a is capable of generating a potential difference between each first vibration electrode 64 and each first vibration electrode 65 of the first gyroscope sensor 60. The second vibration unit 13d is capable of generating a potential difference between each second vibration electrode 74 and each second vibration electrode 75 of the second gyroscope sensor 70. When the first vibration unit 13a applies alternating voltage to the first vibration electrodes 64 and 65, the first vibration arm 62, which is a piezoelectric body, vibrates in the X-axis direction (the front-and-rear direction). The vibration in the X-axis direction is transferred to the first detection arm 63 through the first base 61 and causes the first detection arm 63 to vibrate in the X-axis direction. The first vibration arm 62 and the first detection arm 63 repeat bending motions (vibratory motions) in such a manner as to move away from each other and to move close to each other.

Refer to Figs. 2 and 5(a). When the revolving body 30 swings in the left-and-right direction so as to revolve around the Y axis in a state in which the first detection arm 63 vibrates in the X-axis direction, the first detection arm 63 (the first gyroscope sensor 60) revolving together with the revolving body 30 is subjected to a Coriolis force acting in the Z-axis direction. Consequently, the first detection arm 63 vibrates in the Z-axis direction. That is, the vibratory motion of the first detection arm 63 includes a Z-axis component.

When the first detection arm 63, which is a piezoelectric body, vibrates in the Z-axis direction, an electronic signal corresponding to the vibration of the first detection arm 63 in the Z-axis direction is transmitted through the first detection electrodes 66 and 67 and is input to the first detection unit 13b. For example, alternating voltage arising from the first detection arm 63 (the piezoelectric body) is applied to the first detection unit 13b.

The first detection unit 13b determines the speed of revolution (the angular velocity) of the revolving body 30 and the direction of revolution of the revolving body 30 on the basis of the electrical signal (e.g., the alternating voltage) input to the first detection unit 13b. More specifically, the angular velocity is determined on the basis of the amplitude of the alternating voltage input to the first detection unit 13b, and the direction of revolution is determined on the basis of the phase difference between the alternating voltage output by the first vibration unit 13a and the alternating voltage input to the first detection unit 13b. Then, the first detection unit 13b inputs the obtained information to the first arithmetic unit 13c.

The first arithmetic unit 13c determines, by calculation, physical quantities (displacement, velocity, acceleration, and/or jerk) relevant to vibration of the vibrator Vi in the left-and-right direction on the basis of the information input to the first arithmetic unit 13c by the first detection unit 13b. Arithmetic computations for determining the physical quantities of the vibrator Vi on the basis of the information about the angular velocity determined by the first detection unit 13b may be performed in an appropriate manner. For convenience, the velocity of the vibrator Vi may be determined by multiplying the determined angular velocity by the radius of curvature of the curved surface 31a. The displacement, acceleration, or jerk may be determined by evaluating the integral of the velocity or by performing one or more differential operations on the velocity. Nevertheless, more exact arithmetic expressions or maps describing the relationship between the angular velocity and the physical quantities of the vibrator Vi may be derived on the basis of a more detailed theory, by simulation calculation, and/or by experiment. Artificial intelligence (AI) technology may be used to derive the arithmetic expressions, to create the maps, or to determine the physical quantities of the vibrator Vi. It is not required that these physical quantities be determined by the vibrometer 10. The vibrometer 10 may simply determine whether the vibrator Vi is vibrating in the horizontal direction. The first arithmetic unit 13c inputs information including the determined physical quantities to the wireless communicator 14. The wireless communicator 14 transmits, to an external apparatus, the information including the physical quantities input to wireless communicator 14. In this way, the information about the vibration of the vibrator Vi is provided to a person conducting measurement.

Refer also to Fig. 5(b). When the second vibration unit 13d applies alternating voltage to the second vibration electrodes 74 and 75, the second vibration arm 72, which is a piezoelectric body, vibrates in the Y-axis direction (the front-and-rear direction). The vibration in the Y-axis direction is transferred to the second detection arm 73 through the second base 71 and causes the second detection arm 73 to vibrate in the Y-axis direction. The revolving body 30 in this state swings in the front-and-rear direction so as to revolve around the X axis such that the second detection arm 73 is subjected to a Coriolis force acting in the Z-axis direction. The controller 13 (the second arithmetic unit 13f) then determines, by calculation, physical quantities (displacement, velocity, acceleration, and/or jerk) relevant to vibration of the vibrator Vi in the front-and-rear direction. The mechanism by which the information about the vibration of the vibrator Vi is obtained by calculation in response to the Coriolis force acting on the second detection arm 73 is more or less identical to what has been described in connection with the relationship between the first gyroscope sensor 60 and the controller 13, and the mechanism will not be further elaborated here.

As described above, the controller 13 (e.g., the first arithmetic unit 13c) can obtain, by calculation, information about vibration of the vibrator Vi in the front-and-rear direction and the left-and right direction. The controller 13 (e.g., the first arithmetic unit 13c) can thus input, to the wireless communicator 14, information including physical quantities (displacement, velocity, acceleration, and/or jerk) relevant to vibration of the vibrator Vi in the horizontal direction.

The following describes the relationship between the vibrator and the vibrometer.

Refer to Fig. 2. The revolving body 30 is disposed upright in such a manner that part of the lower surface 31a (the curved surface 31a) is in contact with the placement surface Pi. When subjected to vibration in the horizontal direction, the revolving body 30 rolls opposite to the direction of vibration. Refer to Figs. 2(a) and 2(b). When the vibrator Vi shifts rightward, an inertial force in a leftward direction acts on the revolving body 30, which in turn rolls leftward. As a result, another portion of the revolving body 30 comes into contact with the placement surface Pi. This translates into a change in the distance between the center of gravity of the vibrometer 10 and the portion of the revolving body 30 that is in contact with the placement surface Pi. More specifically, the revolving body 30 in the reference state rolls leftward such that the distance between the center of gravity of the vibrometer 10 and the portion of the revolving body 30 in contact with the placement surface Pi increases. The potential energy held by the revolving body 30 increases accordingly. When viewed from another perspective, the vibrometer 10 is subjected to the restoring force (rotation moment) that acts to bring the vibrometer 10 to the reference state when a force transmitted from the placement surface Pi to the vibrometer 10 with its vector directed upward and a force acting on the center of gravity of the vibrometer 10 with its vector directed downward separate from each other. The vibrometer 10 can thus be brought back into the reference state. The same goes for the case in which the vibrator Vi moves leftward as illustrated in Fig. 2(c).

Refer to Figs. 2(a) to 2(c). While the vibrator Vi continuously vibrates in the horizontal direction, the vibrometer 10 can always be brought back into the reference state by the restoring force caused by the rolling motion of the vibrometer 10. The vibrometer 10 can thus revolve in a manner so as to roll in the direction of vibration.

Refer to Fig. 2. When viewed in the direction along the axis of revolution (the predetermined axis) of the revolving body 30, the curved surface 31a is shaped such that a portion of the curved surface 31a at a greater distance along the curved surface 31a from the reference portion 31c within the curved surface 31a is farther from the center of gravity of the assembly including the revolving body 30 and the members that roll together with the revolving body 30. Due to the rolling motion of the revolving body 30, the portion in contact with the placement surface Pi and the center of gravity overlap or separate from each other when the revolving body 30 is viewed in the direction along its axis of revolution. The force transmitted from the placement surface Pi to the vibrometer 10 with its vector directed upward and the force acting on the center of gravity of the vibrometer 10 with its vector directed downward overlap or separate from each other accordingly. When the contact portion and the center of gravity separate from each other, the revolving body 30 is subjected to the restoring force that acts to bring them to a point in which they will overlap each other again. While the vibrator Vi continuously vibrates, the vibrometer 10 can thus revolve in a manner so as to roll in the direction of vibration. That is, the vibrometer 10 capable of revolving while being placed on the placement surface Pi is provided. In other words, the vibrometer 10 capable of providing information about vibration through the adoption of a new approach is provided.

The gyroscope sensor 50 is disposed within the revolving body 30. The gyroscope sensor 50 is thus protected from external impact. That is, the vibrometer 10 of high durability is provided.

When viewed in the direction along the axis of revolution (the predetermined axis) of the revolving body 30, the gyroscope sensor 50 is farther than the midpoint of the revolving body 30 from the reference portion 31c, with the midpoint being located in the midsection of the revolving body 30 in the direction from the reference portion 31c toward the center of gravity. This arrangement enables an increase in the distance between the placement surface Pi and the gyroscope sensor 50. The gyroscope sensor 50 is thus subjected to large displacements caused by revolution.

At least part of the curved surface 31a including the reference portion 31c is a region of constant curvature when viewed in the direction along the axis of revolution (the predetermined axis) of the revolving body 30. The revolving body 30 is thus capable of revolving in a stable manner.
The information about the vibration of the vibrator Vi in the horizontal direction may be easily obtained by calculation from the revolution of the revolving body 30.

### Second Embodiment

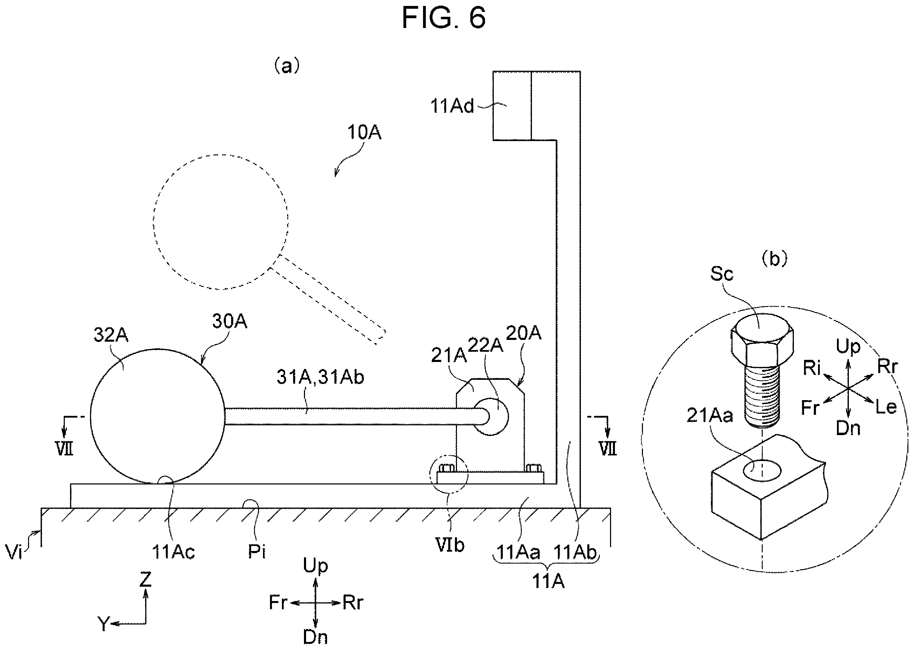

Refer to Fig. 6(a). Fig. 6(a) illustrates a vibrometer 10A according to a second embodiment of the present disclosure. Each element in the present embodiment and the corresponding element in the first embodiment are denoted by the same reference sign and will not be fully dealt with in the following description.

### Vibrometer

The vibrometer 10A (see Fig. 6(a)) is fixed to a vibrator Vi, which vibrates in a vertical direction. The vibrometer 10A (see Fig. 6(a)) determines mainly physical quantities (displacement, velocity, acceleration, and/or jerk) relevant to vibration of the vibrator Vi in the vertical direction.

The vibrometer 10A may have desired dimensions. The height of the vibrometer 10A may be greater than or equal to 5 mm, greater than or equal to 10 mm, greater than or equal to 50 mm, greater than or equal to 100 mm, or greater than or equal to 500 mm. The height of the vibrometer 10A may be less than or equal to 5 mm. The length (in the left-and-right direction) of the vibrometer 10A may be greater than or equal to 10 mm, greater than or equal to 50 mm, greater than or equal to 100 mm, or greater than or equal to 500 mm. The length of the vibrometer 10A may be less than or equal to 10 mm.

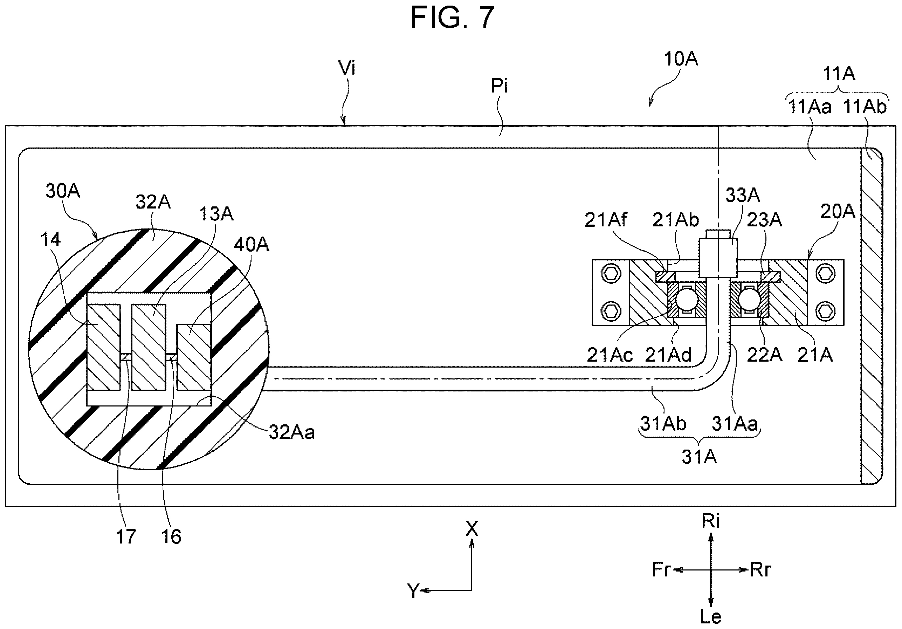

Refer to Figs. 6 and 7. The vibrometer 10A in the example illustrated in Fig. 7 includes a stopper part 11A, a supporter 20A, a revolving body 30A, a detector 40A, a controller 13A, and a wireless communicator 14. The stopper part 11A is fixed to the vibrator Vi. The supporter 20A is fixed to the stopper part 11A. The revolving body 30A is fixed to the supporter 20A in a manner so as to be capable of revolving. The detector 40A is fixed to the revolving body 30A and is capable of determining the angular velocity. The controller 13A controls the detector 40A and obtains, by calculation, information about the vibrator Vi on the basis of the angular velocity determined by the detector 40A. The wireless communicator 14 is capable of transmitting, to the outside, the information obtained by the controller 13A, that is, the information about the vibrator Vi.

### Stopper Part

The stopper part 11A sets a limit to the possible angular range of revolution of the revolving body. The stopper part 11A may limit the possible angular range of revolution of the revolving body 30A to any desired degree. For example, the stopper part 11A may limit the possible angular range of revolution of the revolving body 30A to less than 135°, less than 120°, less than 105°, or less than 90°. The stopper part 11A in the example illustrated in Fig. 6 limits the possible angular range of revolution of the revolving body 30A to 90°.

The stopper part 11A in the example illustrated in Fig. 6 includes a lower stopper part 11Aa and an upper stopper part 11Ab. The revolving body 30A comes into contact with the lower stopper part 11Aa when revolving body 30A revolves in such a manner that a tip (a front end portion) of the revolving body 30A shifts downward. The revolving body 30A comes into contact with the upper stopper part 11Ab when the revolving body 30A revolves in such a manner that the tip of the revolving body 30A shifts upward.

The lower stopper part 11Aa keeps the tip of the revolving body 30A from reaching a site directly below the axis of revolution and sets a limit to the possible angular range of revolution of the revolving body 30A. The lower stopper part 11Aa (see Fig. 6) is fixed to the vibrator Vi. The lower stopper part 11Aa may be fixed to the vibrator Vi by any means. For example, the lower stopper part 11Aa may be screwed to the vibrator Vi. In some embodiments, the lower stopper part 11Aa may be fixed to the vibrator Vi with an adhesive material or may be welded directly onto the vibrator Vi.

An upper surface of the lower stopper part 11Aa (see Fig. 6), that is, the surface with which the revolving body 30A comes into contact extends horizontally from the rear side to the front side. In some embodiments, the upper surface of the lower stopper part 11Aa may slope downward from the rear side to the front side. The possible angular range of revolution of the revolving body 30A may thus be greater than 90°. Alternatively, the upper surface of the lower stopper part 11Aa may slope upward from the rear side to the front side. The possible angular range of revolution of the revolving body 30A may thus be less than 90°.

The lower stopper part 11Aa includes a lower contact portion 11Ac, with which the revolving body 30A comes into contact when the revolving body 30A revolves in such a manner that the tip of the revolving body 30A shifts downward.

The upper stopper part 11Ab sets a limit to the possible angular range of revolution of the revolving body 30A revolving in such a manner that the tip of the revolving body 30A shifts upward. The upper stopper part 11Ab (see Fig. 6) extends upward from the lower stopper part 11Aa and includes an upper contact portion 11Ad, with which the revolving body 30A comes into contact when the revolving body 30A revolves in such a manner that the tip of the revolving body 30A shifts upward. The upper contact portion 11Ad of the upper stopper part 11Ab (see Fig. 6) is located on a straight line extending upward from the axis of revolution of the revolving body 30A. In some embodiments, the upper contact portion 11Ad may be closer than the straight line (extending upward from the axis of revolution of the revolving body 30A) to the front side (to the tip of the revolving body 30A). The range of revolution of the revolving body 30A may be limited accordingly.

The upper contact portion 11Ad and the lower contact portion 11Ac may be made of any desired material. For example, the upper contact portion 11Ad and the lower contact portion 11Ac each may be made of a material softer than the material of any other portion of the stopper part 11A. More specifically, the upper contact portion 11Ad and the lower contact portion 11Ac may be made of rubber or felt. The detector 40A will be cushioned against impact accordingly.

The possible range of revolution of the revolving body 30A is limited by the lower stopper part 11Aa and the upper stopper part 11Ab. When viewed in the direction along the axis of revolution of the revolving body 30A, the possible angular range in the example illustrated in Fig. 6 is formed by a line segment extending frontward (in the horizontal direction) from the axis of revolution and a line segment extending vertically from the axis of revolution. Referring to Fig. 6, the possible angular range is formed on the upper side with respect to a horizontal straight line when viewed in the direction along the axis of revolution. That is, the possible angular range is asymmetrical with respect to the horizontal straight line when viewed in the direction along the axis of revolution.

The vibrometer 10A disclosed herein is fixed to the vibrator Vi, with the upper stopper part 11Ab and/or the lower stopper part 11Aa of the vibrometer 10A being positioned in any desired site. The possible range of revolution of the revolving body 30A may be set to a desired value accordingly; that is, the present disclosure provides a method by which vibration of the vibrator Vi is detected in accordance with the desired set value. For example, the upper stopper part 11Ab and/or the lower stopper part 11Aa may be positioned in such a manner that the possible range of revolution of the revolving body 30A is less than or equal to 135°. A method for detecting vibration of the vibrator Vi is provided accordingly. The upper stopper part 11Ab and/or the lower stopper part 11Aa may be positioned in any way. For example, the lower stopper part 11Aa and/or the lower stopper part 11Aa may undergo positional adjustment. Alternatively, the lower stopper part 11Aa and/or the upper stopper part 11Ab may have an inclined surface with which the revolving body 30A comes into contact.

### Supporter

The supporter 20A in the example illustrated in Fig. 7 includes a main body part 21A, a support part 22A, and a first retainer part 23A. The main body part 21A is fixed to the stopper part 11A. The support part 22A is fitted in the main body part 21A, and the revolving body 30A is supported by the support part 22A in a manner so as to be capable of revolving. The first retainer part 23A keeps the support part 22A from detaching from the main body part 21A.

Refer to Figs. 6(a) and 6(b). The main body part 21A is screwed to the stopper part 11A and is fixed to the vibrator Vi accordingly. The main body part 21A (see Fig. 6(b)) has first holes 21Aa, which are through-holes extending in the up-and-down direction. Screw Sc is inserted into the respective first holes 21Aa and fit into the stopper part 11A.

The main body part 21A may be fixed to the stopper part 11A (the vibrator Vi) by any means. For example, the main body part 21A may be fixed to the stopper part 11A with an adhesive material or may be welded directly onto the stopper part 11A.

The main body part 21A may be made of any desired material. The main body part 21A may, for example, be made of metal. Examples of metal that may be used as the material of the main body part 21A include iron, copper, titanium, stainless steel, steel, aluminum, and alloys of these metals.

Refer to Fig. 7. The main body part 21A (see Fig. 7) has a receiving hole 21Ab, in which the support part 22A is fitted. The receiving hole 21Ab (see Fig. 7) is a through-hole bored through the main body part 21A. The receiving hole 21Ab is circular when viewed laterally.

The receiving hole 21Ab (see Fig. 7) includes an inner wall 21Ac, a protrusion 21Ad, and a recess 21Af. The inner wall 21Ac is circumferentially in contact with an outer surface of the support part 22A. The protrusion 21Ad protrudes from the inner wall 21Ac toward the support part 22A. The recess 21Af is a cutout extending circumferentially along the inner wall 21Ac.

The first retainer part 23A is fitted in the recess 21Af. The support part 22A is fitted between the first retainer part 23A and the protrusion 21Ad and is thus kept from slipping out of the receiving hole 21Ab. The first retainer part 23A may be a snap ring that is substantially C-shaped.

The support part 22A may be a bearing. The bearing (the support part 22A) may be made of metal or a material containing resin. The support part 22A is ring-shaped. The outside diameter of the support part 22A is substantially equal to the inside diameter of the receiving hole 21Ab. Part of the revolving body 30A (a first shaft part 31Aa, which will be described later) extends through the center of the support part 22A.

### Revolving Body

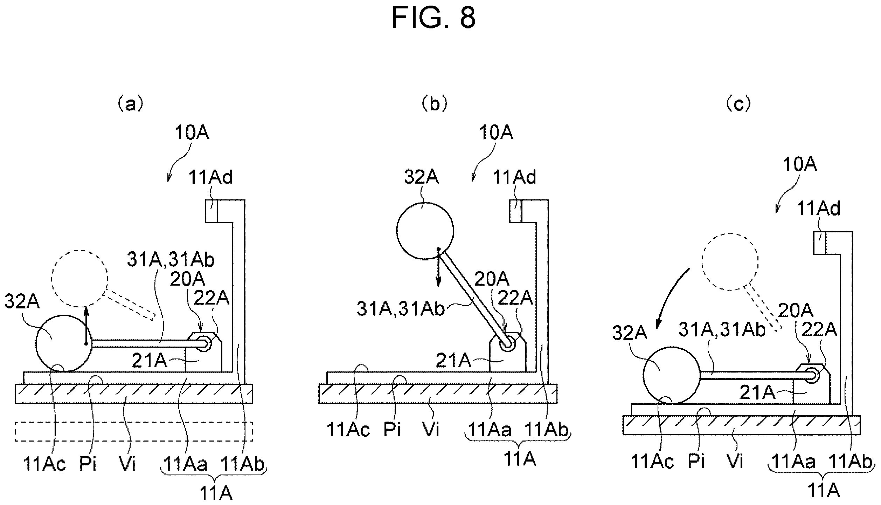

Refer to Fig. 8(a). Vibration of the vibrator Vi causes the revolving body 30A in the reference state to be subjected to a force acting in the vertical direction. The revolving body 30A revolves (clockwise), with the supporter 20A as the axis of revolution. Refer also to Fig. 8(b). When the revolving body 30A revolves in such a manner that the tip of the revolving body 30A (a revolving body revolving part 32A, which is spherical and will be described later) moves away from the placement surface Pi, the moment caused by gravity acts on the revolving body 30A. Refer also to Fig. 8(c). After a while, the revolving body 30A subjected to the moment caused by gravity begins to revolve in the reverse direction (counterclockwise), with the supporter 20A as the axis of revolution. The revolving body 30A is thus brought back into the reference state.

The axis of revolution of the revolving body 30A may extend in any horizontal direction. For example, the axis of revolution of the revolving body 30A may extend in the X-axis direction, the Y-axis direction, or a direction including an X-axis component and a Y-axis component.

Refer to Fig. 6. The revolving body 30A may have any desired shape. It is only required that the revolving body 30A be shaped in a manner as to be capable of revolving along with vibration of the vibrator Vi. More specifically, the design requirement is that the center of gravity of the assembly including the revolving body 30A and the members that revolve together with the revolving body 30A (the detector 40A, the controller 13A, the wireless communicator 14, and the interconnections 16 and 17) is located away from the supporter 20A, that is, away from the support part 22A.

Refer to Fig. 7. The revolving body 30A in the example illustrated in Fig. 7 includes a shaft 31A and the revolving body revolving part 32A. The shaft 31A is inserted into the first hole 21Aa and is rotatably supported by the supporter 20A. The revolving body revolving part 32A is fixed to the shaft 31A

The shaft 31A may have any desired shape. The shaft 31A in the example illustrated in Fig. 7 is substantially L-shaped. Alternatively, the shaft 31A may be bent at more than one point. One end of the shaft 31A is inserted into the first hole 21Aa, and the other end of the shaft 31A is located away from the supporter 20A. That is, the shaft 31A extends away from the axis of rotation of the shaft 31A.
The shaft 31A may, for example, be made of wood, metal, or resin.

The shaft 31A (see Fig. 7) includes the first shaft part 31Aa, a second shaft part 31Ab, and a second retainer part 33A. The first shaft part 31Aa is inserted into the first hole 21Aa. The second shaft part 31Ab is joined to the first shaft part 31Aa and extends away from the support part 22A, that is, away from the supporter 20A (in the left-and-right direction). The second retainer part 33A keeps the first shaft part 31Aa from slipping out of the first hole 21Aa.

The second shaft part 31Ab is longer than the first shaft part 31Aa. For example, the length of the second shaft part 31Ab may be greater than or equal to 2 times the length of the first shaft part 31Aa, greater than or equal to 4 times the length of the first shaft part 31Aa, greater than or equal to 8 times the length of the first shaft part 31Aa, or greater than or equal to 16 times the length of the first shaft part 31Aa. An increase in the length of the second shaft part 31Ab translates into an increase in the distance between the supporter 20A and the center of gravity of the assembly including the revolving body 30A and the members that revolve together with the revolving body 30A. The first shaft part 31Aa is orthogonal to the second shaft part 31Ab; that is, the first shaft part 31Aa extends in a direction that forms an angle with the second shaft part 31Ab.

The revolving body revolving part 32A is fixed to a tip of the second shaft part 31Ab, that is, to a portion farthest from the supporter 20A. The revolving body revolving part 32A may thus be regarded as a tip portion of the revolving body 30A. The revolving body revolving part 32A may have any desired shape. The revolving body revolving part 32A in the example illustrated in Fig. 7 is spherical. In some embodiments, the revolving body revolving part 32A may be ellipsoidal or may in the shape of a circular column.

The revolving body revolving part 32A may be made of any desired material. For example, the revolving body revolving part 32A may be made of resin, metal, or wood. Examples of metal that may be used as the material of the revolving body revolving part 32A include iron, copper, titanium, stainless steel, steel, aluminum, and alloys of these metals.

The revolving body revolving part 32A (see Fig. 7) has a housing cavity 32Aa, in which the detector 40A, the controller 13A, and the wireless communicator 14 are disposed. The housing cavity 32Aa in the revolving body revolving part 32A may be closed with a cover or the like in such a manner that the detector 40A, the wireless communicator 14, and the controller 13A are hidden from external view.

### Detector

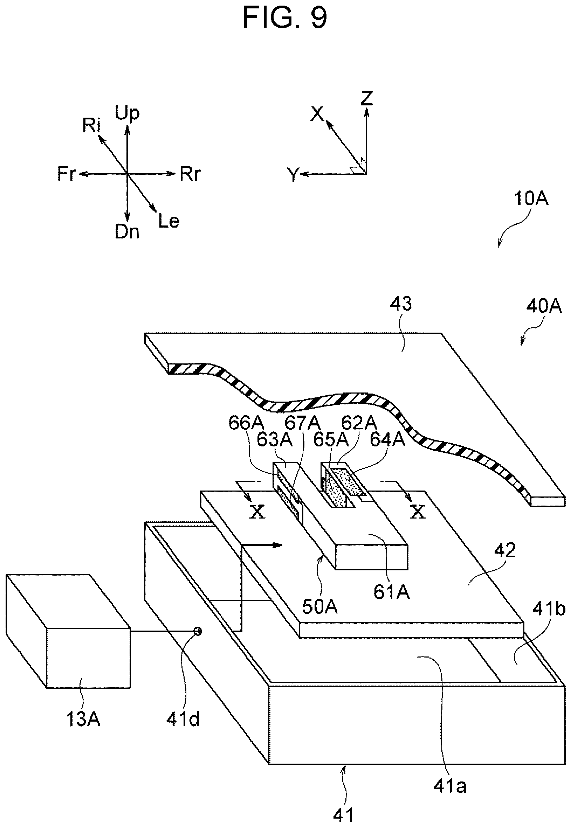

Refer to Figs. 7 and 9. The detector 40A (see Fig. 7) is disposed within the revolving body revolving part 32A. The revolution of the revolving body 30A triggers the detector 40A (see Fig. 9) to determine the angular velocity around the X axis. The detector 40A outputs an electrical signal corresponding to the angular velocity, and the electrical signal is then input to the controller 13A.

The detector 40A in the example illustrated in Fig. 9 includes a case 41, a substrate 42, a gyroscope sensor 50A, and a cover 43. The substrate 42 is disposed within the case 41. The gyroscope sensor 50A is mounted on the substrate 42 and is capable of determining the angular velocity. The gyroscope sensor 50A is covered with the cover 43.

### Gyroscope Sensor

Refer to Fig. 9. The gyroscope sensor 50A is a vibratory gyroscope sensor equipped with MEMS and is capable of determining the angular velocity around the axis of revolution of the revolving body 30A (e.g., the X axis).

The gyroscope sensor 50A (see Fig. 9) is electrically connected to the substrate 42 with bumps 45 (see Fig. 4) therebetween. The bumps 45 are electrically conductive. The gyroscope sensor 50A is connected to the wiring pattern of the substrate 42, and electrical continuity between the gyroscope sensor 50A and the controller 13A can be provided. The gyroscope sensor 50A is fixed to the revolving body 30A.

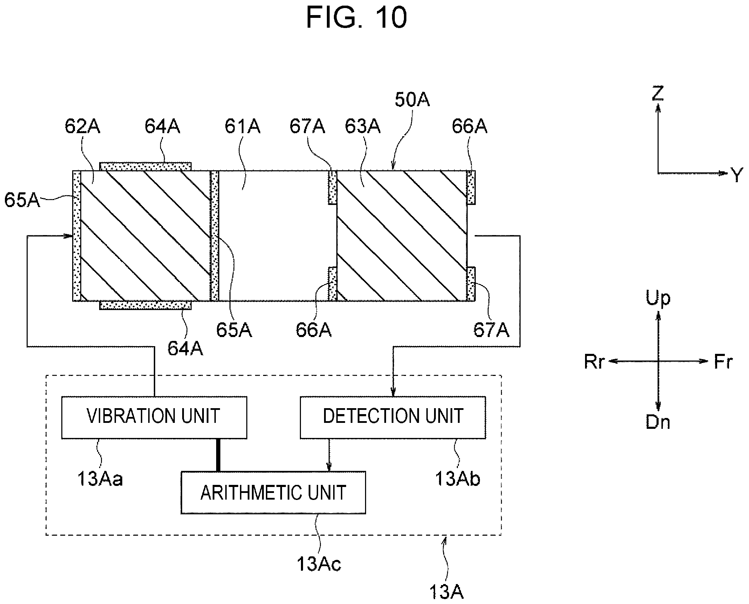

Refer to Figs. 9 and 10. The gyroscope sensor 50A (see Fig. 9) includes a base 61A, a vibration arm 62A, a detection arm 63A, vibration electrodes 64A and 65A (see Fig. 10), and detection electrodes 66A and 67A (see Fig. 10). The vibration arm 62A protrudes (rightward) from the base 61A in the X-axis direction. The detection arm 63A protrudes from the base 61A in the X-axis direction along the vibration arm 62A. The vibration electrodes 64A and 65A are disposed on the vibration arm 62A. The detection electrodes 66A and 67A are disposed on the detection arm 63A.

The base 61A is joined to the vibration arm 62A and the detection arm 63A. The base 61A, the vibration arm 62A, and the detection arm 63A constitute a piezoelectric body. The base 61A may have any desired shape. The base 61A in the example illustrated in Fig. 9 is in the shape of a cube. Alternatively, the base 61A may, for example, in the shape of a circular column.

The base 61A is bonded to the substrate 42 with a bonding material or, more specifically, the bumps 45 (see Fig. 4) located therebetween. The base 61A is thus located away from the substrate 42 (away from the electronic components mounted on the substrate 42). The vibration arm 62A and the detection arm 63A (see Fig. 9) protrude laterally from a right side surface of the base 61A. The vibration arm 62A and the detection arm 63A are located away from the substrate 42 (away from the electronic components mounted on the substrate 42).

The vibration arm 62A and the detection arm 63A may have any desired shape. The vibration arm 62A and the detection arm 63A in the example illustrated in Fig. 9 are rectangular when viewed in cross section taken in the Z-axis direction (the vertical direction). Alternatively, the vibration arm 62A and the detection arm 63A may be circular when viewed in cross section taken in the Z-axis direction.

Refer to Fig. 10. The vibration electrodes 64A (see Fig. 10) are disposed on an upper surface and a lower surface, respectively, of the vibration arm 62A. The vibration electrodes 65A (see Fig. 10) are disposed on side surfaces of the vibration arm 62A that are located on the respective sides in the X-axis direction (the left-and-right direction). The vibration electrodes 64A and 65A each extend in the Y-axis direction (the front-and-rear direction). The width of each vibration electrode 64A is less than the width of each vibration electrode 65A. The vibration electrodes 64A are each located away from the vibration electrodes 65A and are not in contact with the vibration electrodes 65A.

The detection electrodes 66A and 67A are disposed on side surfaces of the detection arm 63A that are located on the respective sides in the Y-axis direction. One of the detection electrodes 66A is disposed on an upper portion of a front side surface of the detection arm 63A, and the other detection electrode 66A is disposed on a lower portion of a rear side surface of the detection arm 63A. One of the detection electrodes 67A is disposed on a lower portion of the front side surface of the detection arm 63A, and the other detection electrode 67A is disposed on an upper portion of the rear side surface of the detection arm 63A. The detection electrodes 66A and 67A are connected to the controller 13A with an interconnection (see Fig. 6) therebetween in such a manner that electrical continuity between the controller 13A and each of these detection electrodes can be provided. The detection electrodes 66A are each located away from the detection electrodes 67A and are not in contact with the detection electrodes 67A.

### Controller

Refer to Figs. 9 and 10. The controller 13A is electrically connected to the detector 40A (the gyroscope sensor 50A). More specifically, the controller 13A is connected to the vibration electrodes 64A and 65A and the detection electrodes 66A and 67A in such a manner that electrical continuity between the controller 13A and each of these electrodes can be provided.

Refer to Fig. 10. The controller 13A (see Fig. 10) includes the vibration electrodes 64A, a vibration unit 13Aa, a detection unit 13Ab, and an arithmetic unit 13Ac. The vibration unit 13Aa applies voltage to the vibration electrodes 64A and 65A. The detection unit 13Ab obtains information from the detection arm 63A (the gyroscope sensor 50A) on the basis of an electrical signal input to the detection unit 13Ab by the detection electrodes 66A and 67A. The arithmetic unit 13Ac obtains, by calculation, information about vibration (of the vibrator Vi (see Fig. 6)) on the basis of the electrical signal detected by the detection unit 13Ab.

Refer to Figs. 9 and 10. The detection unit 13Ab detects an electrical signal output by the detection arm 63A. When viewed from another perspective, the detection unit 13Ab obtains information about revolution of the revolving body 30A or, more specifically, the speed of revolution around the X axis (the angular velocity of the revolving body 30A) and the direction of revolution.

The arithmetic unit 13Ac obtains, by calculation, information about vibration of the vibrator Vi (see Fig. 6) on the basis of the information input to the arithmetic unit 13Ac by the detection unit 13Ab. The arithmetic unit 13Ac may obtain, by calculation, information about vibration of the vibrator Vi on the basis of the magnitude of the alternating voltage applied by the vibration unit 13Aa and the information input to the arithmetic unit 13Ac by the detection unit 13Ab. With the gyroscope sensor 50A being fixed to a predetermined portion of the revolving body 30A, the arithmetic unit 13Ac determines the velocity of the gyroscope sensor 50A revolving together with the revolving body 30A or, more specifically, the velocity of the predetermined portion in a predetermined direction (e.g., the up-and-down direction) and obtains information about vibration of the vibrator Vi on the basis of the velocity in the predetermined direction. A well-known method (see, for example, Japanese Unexamined Patent Application Publication No. 2019-056652) may be used to determine, by calculation, the velocity of the gyroscope sensor 50A in the predetermined direction. The predetermined direction may be identified in such a manner that the arithmetic unit 13Ac uses mathematical expressions to determine the velocity in the predetermined direction on the basis of the angular velocity. It is not required that physical quantities such as the velocity in the predetermined direction be determined by the vibrometer 10A. The vibrometer 10A may simply determine whether the vibrator Vi is vibrating in the predetermined direction.

The information obtained by the arithmetic unit 13Ac include physical quantities (displacement, velocity, acceleration, and/or jerk) relevant to vibration. The arithmetic unit 13Ac is capable of inputting information including the determined physical quantities to the wireless communicator 14.

### Relationship between Gyroscope Sensor and Controller

Refer to Figs. 9 and 10. When the vibration unit 13Aa applies alternating voltage to the vibration electrodes 64A and 65A, the vibration arm 62A, which is a piezoelectric body, vibrates in the Y-axis direction (the front-and-rear direction). The vibration arm 62A and the detection arm 63A repeat bending motions (vibratory motions) in such a manner as to move away from each other and to move close to each other, with the base 61A therebetween.

When the revolving body 30A revolves around the X axis, with the supporter 20A (the support part 22A) as the axis of revolution, in a state in which the detection arm 63A vibrates in the Y-axis direction, the detection arm 63A (the gyroscope sensor) is subjected to a Coriolis force. Consequently, the detection arm 63A vibrates in the Z-axis direction. The controller 13A obtains information about vibration of the vibrator Vi from an electrical signal input to the controller 13A by the detection arm 63A vibrating in the Z-axis direction. Details that have been described above in relation to the first embodiment and are common to the present embodiment and the first embodiment will not be further elaborated here.

Refer to Fig. 7. The revolving body 30A is supported by the supporter 20A in a manner so as to be capable of revolving, with the axis of revolution in a horizontal direction. The center of gravity of the revolving body 30A is located away from the supporter 20A. In this state, vibration of the vibrator Vi in a vertical direction causes the revolving body 30A to revolve, with the supporter 20A as the axis of revolution. The vibrometer 10A capable of providing information about vibration through the adoption of a new approach is provided accordingly.

The gyroscope sensor 50A is fixed to the revolving body revolving part 32A. The gyroscope sensor 50A fixed to the revolving body revolving part 32A is advantageous in that the gyroscope sensor 50A is placed some distance away from the axis of revolution of the revolving body 30A and may thus be subjected to large displacements.

The gyroscope sensor 50A is disposed within the revolving body 30A. The gyroscope sensor 50A will be cushioned against external impact accordingly. That is, the vibrometer 10A of high durability is provided.

### Third Embodiment

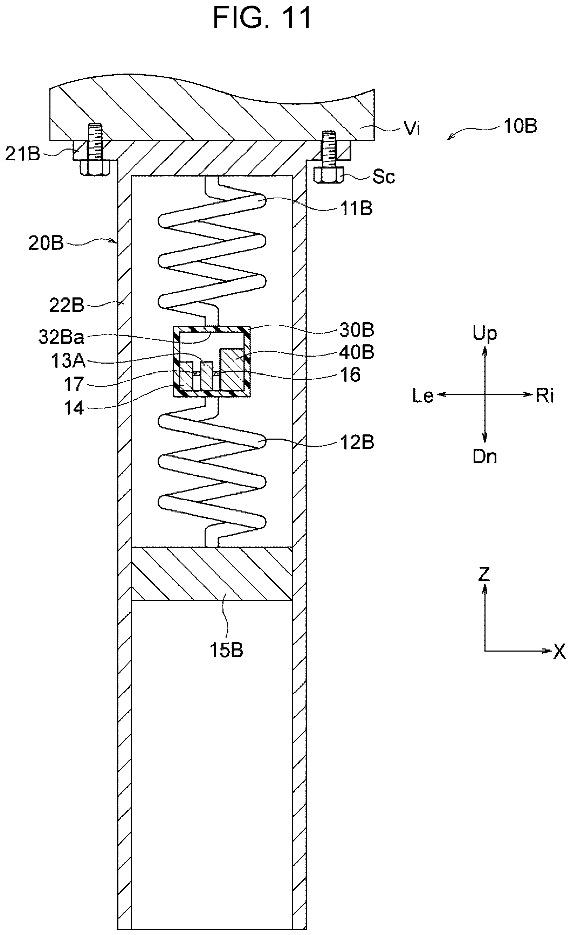

Refer to Fig. 11. Fig. 11 illustrates a vibrometer 10B according to a third embodiment of the present disclosure. Each element in the present embodiment and the corresponding element in the first or second embodiment are denoted by the same reference sign and will not be fully dealt with in the following description.

The vibrometer 10B (see Fig. 11) is fixed to a vibrator Vi, which vibrates in a vertical direction. The vibrometer 10B (see Fig. 11) determines physical quantities (displacement, velocity, acceleration, and/or jerk) relevant to vibration of the vibrator Vi in the vertical direction. In some embodiments, the vibrator Vi to which the vibrometer 10B is fixed may vibrate in a horizontal direction, and the vibrometer 10B may determine physical quantities (displacement, velocity, acceleration, and/or jerk) relevant to vibration of the vibrator Vi in the horizontal direction.

The vibrometer 10B may have desired dimensions. The length of the vibrometer 10B may be greater than or equal to 10 mm, greater than or equal to 50 mm, greater than or equal to 100 mm, or greater than or equal to 500 mm. The length of the vibrometer 10B may be less than or equal to 10 mm. The width of the vibrometer 10B may be greater than or equal to 5 mm, greater than or equal to 10 mm, greater than or equal to 50 mm, greater than or equal to 100 mm, or greater than or equal to 500 mm. The width of the vibrometer 10B may be less than or equal to 5 mm.

The vibrometer 10B in the example illustrated in Fig. 11 includes a supporter 20B, a first elastic body 11B, a revolving body 30B, a second elastic body 12B, a detector 40B, a controller 13A, a wireless communicator 14, and a force-exerting member 15B. The supporter 20B is fixed to the vibrator Vi. The first elastic body 11B has a helical shape, with an upper end thereof (hereinafter also referred to as a first end) being fixed to the supporter 20B. The revolving body 30B is fixed to a lower end of the first elastic body 11B (hereinafter also referred to as a second end). The second elastic body 12B has a helical shape, with an upper end thereof (hereinafter also referred to as a third end) being fixed to the revolving body 30B. The first elastic body 11B and the second elastic body 12B wind in opposite directions. The detector 40B is fixed to the revolving body 30B and is capable of determining the angular velocity. The controller 13A controls the detector 40B and obtains, by calculation, information about the vibrator Vi on the basis of the angular velocity determined by the detector 40B. The wireless communicator 14 is capable of transmitting, to the outside, the information obtained by the controller 13A, that is, the information about the vibrator Vi. The force-exerting member 15B is fixed to a lower end of the second elastic body 12B (hereinafter also referred to as a fourth end) and exerts a downward force on the first elastic body 11B and the second elastic body 12B.

### Supporter

The supporter 20B may be made of any desired material. The supporter 20B may, for example, be made of metal, resin, or a ceramic material. Examples of metal that may be used as the material of the supporter 20B include iron, copper, titanium, stainless steel, steel, aluminum, and alloys of these metals.

The supporter 20B in the example illustrated in Fig. 11 includes a fixed part 21B and a guide part 22B. The fixed part 21B is fixed to the vibrator Vi. The guide part 22B extends from the fixed part 21B along the first elastic body 11B, the revolving body 30B, the second elastic body 12B, and the force-exerting member 15B and guides the force-exerting member 15B. The guide part 22B extends downward from the fixed part 21B and guides the force-exerting member 15B.

The fixed part 21B may have through-holes extending in the up-and-down direction. Screws Sc may be inserted into the respective through-holes and be fitted into the vibrator Vi. The supporter 20B is fastened in place with the screws Sc fitted in the vibrator Vi. In some embodiments, the main body part 21A may be welded directly onto the vibrator Vi or may be fixed to the vibrator Vi with an adhesive material.

The guide part 22B is tubular in shape. The guide part 22B, which is tubular, may have any desired shape when viewed in cross section taken in the horizontal direction. For example, the guide part 22B may be in the shape of a circular frame, a rectangular frame, or an elliptical frame when viewed in cross section taken in the horizontal direction.

The guide part 22B is tubular in shape and extends in the up-and-down direction. The first elastic body 11B, the revolving body 30B, the second elastic body 12B, and the force-exerting member 15B are accommodated in the guide part 22B, which is tubular. The length of the guide part 22B in the up-and-down direction may, for example, be greater than the sum total of the length of first elastic body 11B in a stretched state, the length of the second elastic body 12B in a stretched state, the length of the revolving body 30B in the up-and-down direction, and the length of the force-exerting member 15B in the up-and-down direction. An inner surface of the guide part 22B is adjacent to the entire circumference of the force-exerting member 15B. The guide part 22B can thus guide the force-exerting member 15B, which undergoes displacement caused by the stretching and contraction of the first elastic body 11B and the second elastic body 12B. More specifically, the guide part 22B can guide the force-exerting member 15B in such a manner that the force-exerting member 15B undergoes displacement in the vertical direction only. Due to the presence of the guide part 22B, the revolving body 30B can shift in the vertical direction only, that is, only in the direction in which the first to fourth ends are aligned.

### First Elastic Body

The first elastic body 11B (see Fig. 11) between its upper end (the first end) and its lower end (the second end) is wound in a helical shape. The upper end of the first elastic body 11B is fixed to the fixed part 21B. The first elastic body 11B may have any number of winding turns. The number of winding turns of the first elastic body 11B may be greater than or equal to 2, greater than or equal to 8, greater than or equal to 32, or greater than or equal to 128. The first elastic body 11B may be wound in a right-handed helix or a left-handed helix.

The first elastic body 11B may be made of any desired material. For example, the first elastic body 11B may be made of resin, metal, or a composite material containing resin and metal. Examples of metal that may be used as the material of the first elastic body 11B include steel, stainless steel, iron, copper, and alloys of these metals. The first elastic body 11B may have any desired spring constant. For example, the spring constant of the first elastic body 11B may be 0.7 N/mm.

### Revolving Body

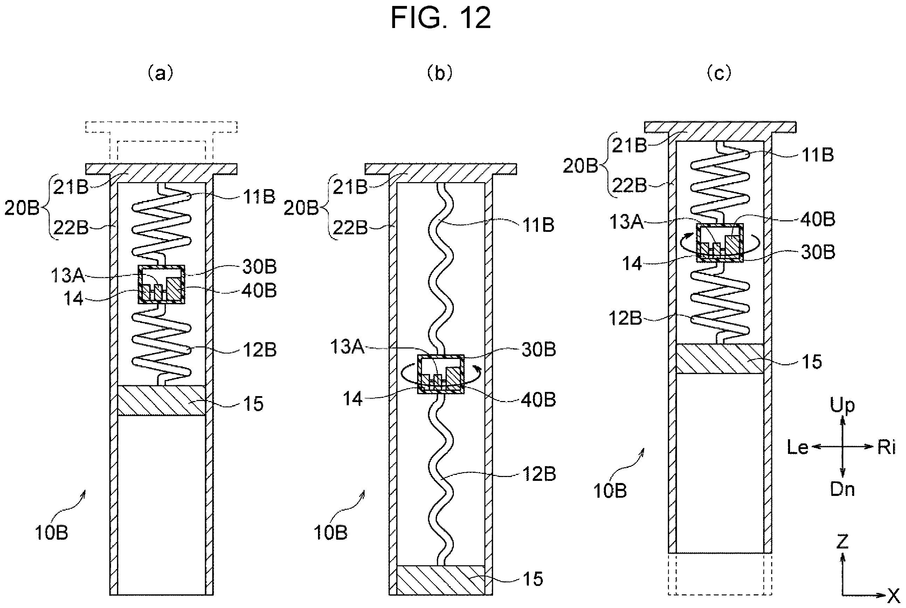

Refer to Fig. 12(a). The revolving body 30B is tied to the vibrator Vi (see Fig. 11) with the supporter 20B and the first elastic body 11B therebetween. The second elastic body 12B is fixed to the revolving body 30B. When the vibrator Vi vibrates in a manner so as to shift upward, an inertial force acts on the force-exerting member 15B, which in turn exerts a downward force on first elastic body 11B and the second elastic body 12B. Consequently, the first elastic body 11B and the second elastic body 12B are placed under tension.

Refer also to Fig. 12(b). The first elastic body 11B and the second elastic body 12B each have a helical shape and wind in opposite directions. The tension acting along the helical shapes causes the first elastic body 11B and the second elastic body 12B to unwind. As the helical shapes of the first elastic body 11B and the second elastic body 12B unwind, the number of winding turns of the first elastic body 11B and the number of winding turns of the second elastic body 12B change accordingly. The revolving body 30B is fixed to the first elastic body 11B and the second elastic body 12B. The revolving body 30B revolves around the Z axis (e.g., in a counterclockwise direction).

Refer also to Fig. 12(c). When the vibrator Vi vibrates in a manner so as to shift downward, the force exerted on the first elastic body 11B and the second elastic body 12B weakens. The tension acting on the first elastic body 11B and the second elastic body 12B weakens correspondingly. Consequently, the first elastic body 11B and the second elastic body 12B are brought back into the reference state. Meanwhile, the revolving body 30B revolves around the Z axis (e.g., in a clockwise direction). While the vibrator Vi continuously vibrates in the up-and-down direction, the revolving body 30B revolves in the clockwise and counterclockwise directions.

Refer to Fig. 11. The revolving body 30B may have any desired shape. For example, the revolving body 30B may be in the shape of a cube, a circular column, or a polygonal prism (e.g., a pentagonal prism).

The revolving body 30B (see Fig. 11) has a housing cavity 32Ba, in which the detector 40B, the controller 13A, and the wireless communicator 14 are disposed. The housing cavity 32Ba in the revolving body 30B may be closed with a cover or the like in such a manner that the detector 40B, the controller 13A, and the wireless communicator 14 are hidden from external view. The revolving body 30B may have desired dimensions, which depend on the sizes of the detector 40B, the controller 13A, and the wireless communicator 14 accommodated in the revolving body 30B. The revolving body 30B may be made of any desired material. For example, the revolving body 30B may be made of resin, metal, or a ceramic material.

### Second Elastic Body

The second elastic body 12B extends downward from the revolving body 30B. The second elastic body 12B between its upper end (the third end) and its lower end (the fourth end) is wound in a helical shape winding opposite in direction to the helical shape of the first elastic body 11B. The second elastic body 12B may have any number of winding turns. The first elastic body 11B and the second elastic body 12B may have the same number of winding turns. In some embodiments, the number of winding turns of the second elastic body 12B is not equal to the number of winding turns of the first elastic body 11B. The lower end (the fourth end) of the second elastic body 12B is capable of shifting relative to the upper end (the first end) of the first elastic body 11B.

The second elastic body 12B may be made of any desired material. The first elastic body 11B and the second elastic body 12B may be made of the same material or may be made of different materials. The second elastic body 12B may have any desired spring constant. The first elastic body 11B and the second elastic body 12B may have the same spring constant. In some embodiments, the spring constant of the second elastic body 12B is not equal to the spring constant of the first elastic body 11B.

### Detector

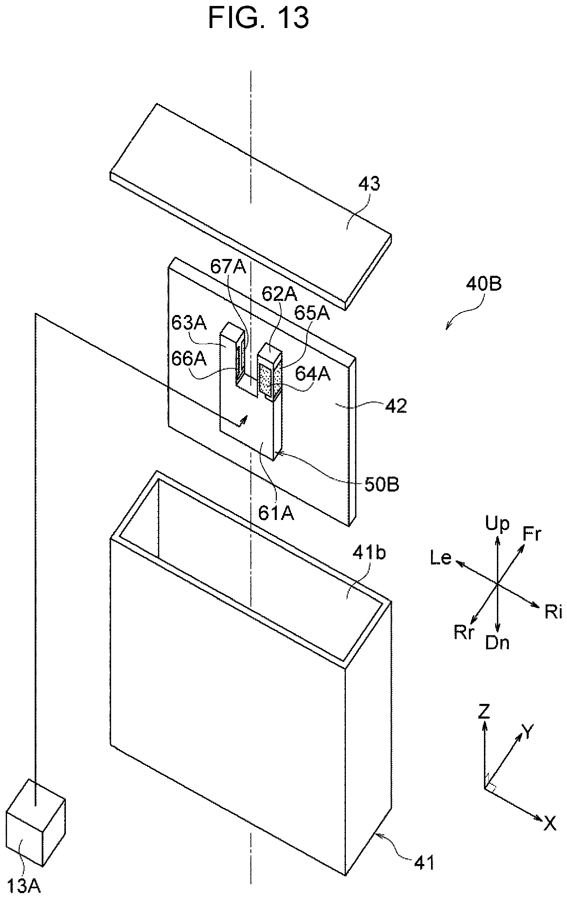

Refer to Figs. 11 and 13. The detector 40B (see Fig. 13) is disposed within the revolving body 30B to determine the angular velocity around the Z axis. The detector 40B outputs an electrical signal corresponding to the angular velocity, and the electrical signal is then input to the controller 13A.

Refer to Fig. 13. The detector 40B in the example illustrated in Fig. 13 includes a case 41, a substrate 42, a gyroscope sensor 50B, and a cover 43. The substrate 42 is disposed within the case 41. The gyroscope sensor 50B is mounted on the substrate 42 and is capable of determining the angular velocity. The gyroscope sensor 50B is covered with the cover 43.

### Gyroscope Sensor

The gyroscope sensor 50B (see Fig. 13) is a vibratory gyroscope sensor equipped with MEMS and is capable of determining the angular velocity around the Z axis. When viewed from another perspective, the angular velocity around the Z axis is the angular velocity around the axis of revolution extending in the direction from the upper end (the first end) of the first elastic body 11B toward the lower end (the fourth end) of the second elastic body 12B. The gyroscope sensor 50B (see Fig. 13) is electrically connected to the substrate 42 with bumps 45 (see Fig. 4) therebetween. The bumps 45 are electrically conductive. The gyroscope sensor 50B is connected to the substrate 42, and electrical continuity between the gyroscope sensor 50B and the controller 13A can be provided.

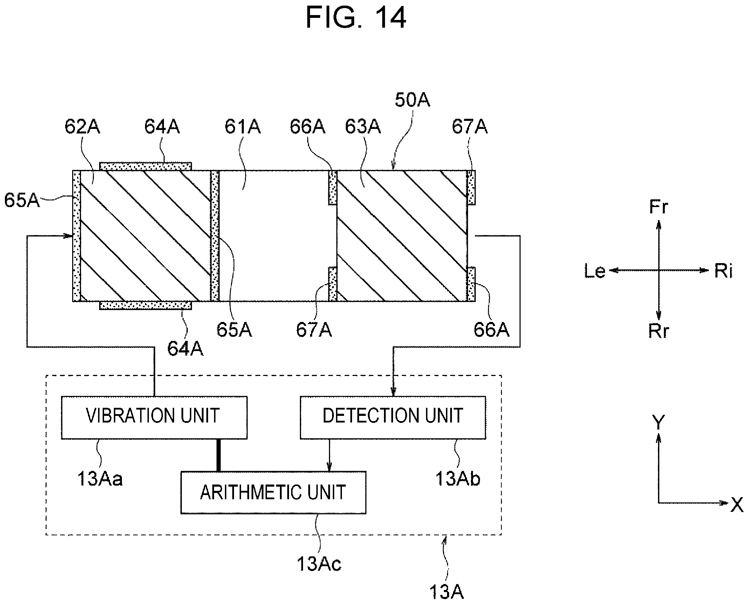

Refer to Figs. 13 and 14. The gyroscope sensor 50B (see Fig. 13) includes a base 61A, a vibration arm 62A, a detection arm 63A, vibration electrodes 64A and 65A (see Fig. 14), and detection electrodes 66A and 67A (see Fig. 14). The vibration arm 62A protrudes (upward) from the base 61A in the Z-axis direction. The detection arm 63A protrudes from the base 61A in the Z-axis direction along the vibration arm 62A. The vibration electrodes 64A and 65A are disposed on the vibration arm 62A. The detection electrodes 66A and 67A are disposed on the detection arm 63A.

Refer to Fig. 14. The vibration electrodes 64A (see Fig. 14) are disposed on an upper surface and a lower surface, respectively, of the vibration arm 62A. Referring to Fig. 13, the upper surface faces the substrate 42, and the lower surface is located on the rear side. When viewed from another perspective, the vibration electrodes 64A are disposed on a front side surface and a rear side surface, respectively, of the vibration arm 62A. The front side surface and the rear side surface are located on the respective sides in the Y-axis direction (the front-and-rear direction). The vibration electrodes 65A (see Fig. 14) are disposed on side surfaces of the vibration arm 62A that are located on the respective sides in the X-axis direction (the left-and-right direction). The vibration electrodes 64A and 65A each extend in the Z-axis direction (the up-and-down direction). The width of each vibration electrode 64A is less than the width of each vibration electrode 65A. The vibration electrodes 64A are each located away from the vibration electrodes 65A and are not in contact with the vibration electrodes 65A.

The detection electrodes 66A and 67A (see Fig. 14) are disposed on side surfaces of the detection arm 63A that are located on the respective sides in the X-axis direction.
One of the detection electrodes 66A is disposed on a rear portion of a right side surface of the detection arm 63A, and the other detection electrode 66A is disposed on a front portion of a left side surface of the detection arm 63A.
One of the detection electrodes 67A is disposed on a front portion of the right side surface of the detection arm 63A, and the other detection electrode 67A is disposed on a rear portion of the left side surface of the detection arm 63A. The detection electrodes 66A and 67A are connected to the controller 13A with an interconnection 16 (see Fig. 11) therebetween in such a manner that electrical continuity between the controller 13A and each of these detection electrodes can be provided. The detection electrodes 66A are each located away from the detection electrodes 67A and are not in contact with the detection electrodes 67A.

### Controller

The controller 13A (see Fig. 14) includes a vibration unit 13Aa, a detection unit 13Ab, and an arithmetic unit 13Ac. The vibration unit 13Aa applies voltage to the vibration electrodes 64A and 65A. When energized with the voltage applied by the vibration unit 13Aa, the gyroscope sensor 50B (the detection arm 63A) outputs an electrical signal, which is then detected by the detection unit 13Ab. The arithmetic unit 13Ac obtains, by calculation, information about vibration (of the vibrator Vi (see Fig. 1)) on the basis of the electrical signal detected by the detection unit 13Ab.

The detection arm 63A outputs an electrical signal (when a Coriolis force acts on the detection arm 63A). On the basis of the electrical signal, the detection unit 13Ab obtains information about revolution of the revolving body 30B or, more specifically, the speed of revolution around the Z axis (the angular velocity of the revolving body 30B) and the direction of revolution.

### Force-Exerting Member

Refer to Fig. 11. The force-exerting member 15B may have any desired shape. In a case in which the guide part 22B is in the shape of a circular frame when viewed in cross section, the force-exerting member 15B may be in the shape of a circular column. In a case in which the guide part 22B is in the shape of a rectangular frame when viewed in cross section, the force-exerting member 15B may be in the shape of a cube. The entire circumference of the force-exerting member 15B (see Fig. 11) is adjacent to the inner surface of the guide part 22B.

The force-exerting member 15B may be made of any desired material. The force-exerting member 15B may, for example, be made of metal. Examples of metal that may be used as the material of the force-exerting member 15B include brass (an alloy of copper and zinc), iron, aluminum, tungsten, and lead. The force-exerting member 15B may be made of a material whose density is higher than the density of the material of the first elastic body 11B and higher than the density of the material of the second elastic body 12B. The mass of the force-exerting member 15B may be greater than the total sum of the mass of the first elastic body 11B, the mass of the second elastic body 12B, and the mass of the revolving body 30B.

### Relationship between Gyroscope Sensor and Controller

Refer to Figs. 13 and 14. When the vibration unit 13Aa applies alternating voltage to the vibration electrodes 64A and 65A, the vibration arm 62A, which is a piezoelectric body, vibrates in the X-axis direction (the left-and-right direction). The vibration arm 62A and the detection arm 63A repeat bending motions (vibratory motions) in such a manner as to move away from each other and to move close to each other, with the base 61A therebetween.

When the revolving body 30B revolves around the Z axis, with the supporter 20B as the axis of revolution, in a state in which the detection arm 63A vibrates in the X-axis direction, the detection arm 63A (the gyroscope sensor) is subjected to a Coriolis force. Consequently, the detection arm 63A vibrates in the Y-axis direction. The controller 13A obtains information about vibration of the vibrator Vi from an electrical signal input to the controller 13A by the detection arm 63A vibrating in the Y-axis direction. Details that have been described above in relation to the first or second embodiment and are common to the present embodiment and the first or second embodiment will not be further elaborated here.

Arithmetic computations for determining the physical quantities of the vibrator Vi on the basis of the information about the angular velocity of the revolving body 30B may be performed in an appropriate manner. For example, arithmetic expressions or maps describing the relationship between the angular velocity of the revolving body 30B and the velocity of the vibrator Vi may be derived on the basis of a theory, by simulation calculation, and/or by experiment. Similarly, arithmetic expressions or maps describing the relationship between the integral of the angular velocity and the displacement of the vibrator Vi may be derived. AI technology may be used to derive the arithmetic expressions, to create the maps, or to determine the physical quantities of the vibrator Vi. It is not required that these physical quantities be determined by the vibrometer 10B. The vibrometer 10B may simply determine whether the vibrator Vi is vibrating in the up-and-down direction.

The second elastic body 12B is wound in a helical shape winding opposite in direction to the helical shape of the first elastic body 11B. When the force-exerting member 15B shifts downward, tension acts in such a way as to cause the first elastic body 11B and the second elastic body 12B to unwind. The number of winding turns of the first elastic body 11B having a helical shape and the number of winding turns of the second elastic body 12B having a helical shape change accordingly such that the revolving body 30B revolves. The vibrometer 10B capable of providing information about vibration through the adoption of a new approach is provided accordingly.

The gyroscope sensor 50B is disposed within the revolving body 30B. The gyroscope sensor 50B will be cushioned against external impact accordingly. That is, the vibrometer 10B of high durability is provided.

The vibrometer 10B includes the supporter 20B, which is fixed to the vibrator Vi to hold the first elastic body 11B. The supporter 20B includes the guide part 22B, in which the force-exerting member 15B is accommodated. The guide part 22B guides the force-exerting member 15B, which undergoes displacement caused by the stretching and contraction of the first elastic body 11B and the second elastic body 12B. The force-exerting member 15B is guided while undergoing displacement caused by the stretching and contraction of the first elastic body 11B and the second elastic body 12B such that the force-exerting member 15B shifts in the vertical direction only. Any swinging motion of the revolving body 30B in the horizontal direction will be constrained accordingly.

### Fourth Embodiment

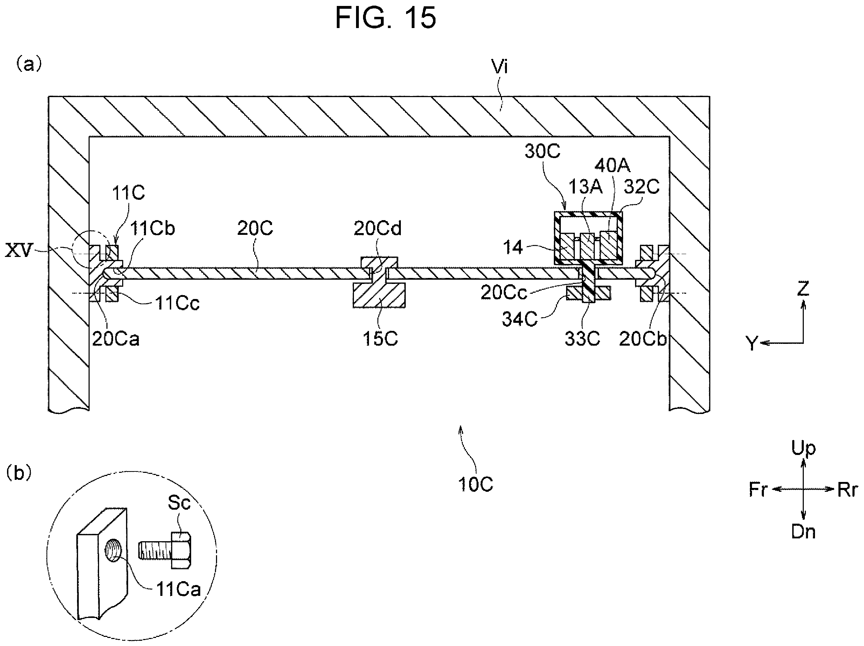

Refer to Fig. 15(a). Fig. 15(a) illustrates a vibrometer 10C according to a fourth embodiment of the present disclosure. Each element in the present embodiment and the corresponding element in the first, second, or third embodiment are denoted by the same reference sign and will not be fully dealt with in the following description.

The vibrometer 10C (see Fig. 15(a)) is fixed to a vibrator Vi, which vibrates in a vertical direction. The vibrometer 10C (see Fig. 15(a)) determines physical quantities (displacement, velocity, acceleration, and/or jerk) relevant to vibration of the vibrator Vi in the vertical direction.

The vibrometer 10C may have desired dimensions. A dimension of the vibrometer 10C may be greater than or equal to 5 mm, greater than or equal to 10 mm, greater than or equal to 50 mm, or greater than or equal to 100 mm. The height of the vibrometer 10C may be less than or equal to 5 mm. The width of the vibrometer 10C may be greater than or equal to 10 mm, greater than or equal to 50 mm, greater than or equal to 100 mm, or greater than or equal to 500 mm. The width of the vibrometer 10C may be less than or equal to 10 mm.

The vibrometer 10C (see Fig. 15(a)) includes fixed holders 11C, a supporter 20C, a revolving body 30C, a detector 40A, and a force-exerting member 15C. The fixed holders 11C are fixed to the vibrator Vi. The supporter 20C is fixed to the fixed holders 11C and is flexible. The revolving body 30C is supported by the supporter 20C. The detector 40A is fixed to the revolving body 30C and is capable of determining the angular velocity. The force-exerting member 15C is attached to the supporter 20C to exert a downward force on the supporter 20C.

### Fixed Parts

The fixed holders 11C (see Fig. 15(a)) each have a through-hole 11Ca. Each fixed holder 11C is fixed to the vibrator Vi with a screw Sc, which is inserted into the through-hole 11Ca. The fixed holders 11C each include a receiving part 11Cb, in which the supporter 20C is fitted. The fixed holders 11C each also include a first retainer part 11Cc, which keeps the supporter 20C from slipping out of the receiving part 11Cb. The fixed holders 11C may be made of any desired material. For example, the fixed holders 11C may be made of rubber, resin, metal, or a ceramic material.

### Supporter

The supporter 20C may have any desired material. The supporter 20C (see Fig. 15(a)) is in the shape of a flat plate and extends in the front-and-rear direction, with two ends of the supporter 20C in the front-and-rear direction being denoted by 21Ca and 21Cb, respectively. The dimension of the supporter 20C in the front-and-rear direction may be greater than or equal to 2 times the dimension of the supporter 20C in the left-and-and direction, greater than or equal to 4 times the dimension of the supporter 20C in the left-and-and direction, greater than or equal to 8 times the dimension of the supporter 20C in the left-and-and direction, greater than or equal to 16 times the dimension of the supporter 20C in the left-and-and direction, or less than or equal to two times the dimension of the supporter 20C in the left-and-and direction. The dimension of the supporter 20C in the front-and-rear direction may be greater than the dimension of the supporter 20C in the left-and-right direction.

The supporter 20C has the flexibility of being able to bend in the vertical direction along with the vibrator Vi vibrating vertically. The supporter 20C may be made of any desired material. For example, the supporter 20C may be made of rubber, metal, or resin.

The supporter 20C has a revolving body insertion hole 20Cc and a force-exerting member insertion hole 20Cd. The revolving body 30C is inserted in the revolving body insertion hole 20Cc, and the force-exerting member 15C is inserted in the force-exerting member insertion hole 20Cd. The revolving body insertion hole 20Cc and the force-exerting member insertion hole 20Cd each may have any desired diameter.

### Revolving Body

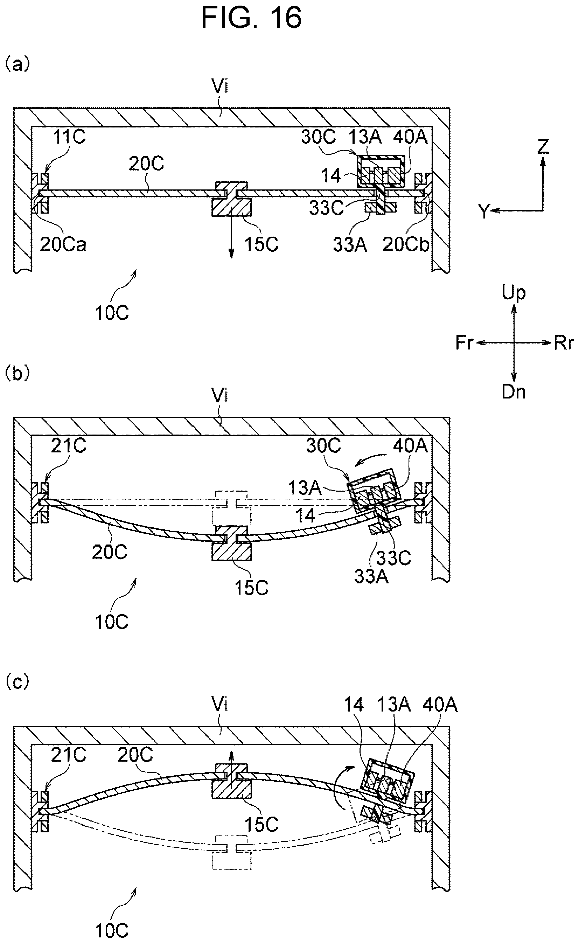

Refer to Fig. 16(a). The supporter 20C is flexible and supports the revolving body 30C and the force-exerting member 15C. The force-exerting member 15C is disposed at the center of the supporter 20C in such a manner that a downward force caused by gravitation acts on the supporter 20C. When the vibrator Vi shifts upward, the force-exerting member 15C under the influence of an inertial force exerts a greater force on the supporter 20C. Refer also to Fig. 16(b). When being subjected to the greater force, the supporter 20C entirely bends downward due to a pulling force of the force-exerting member 15C. When the supporter 20C bends, the revolving body 30C revolves counterclockwise around the X axis. Refer also to Fig. 16(c). When the vibrator Vi shifts downward, the force-exerting member 15C shifts upward correspondingly such that the force exerted on the supporter 20C by the force-exerting member 15C weakens. Consequently, the supporter 20C entirely bends upward, and the revolving body 30C revolves clockwise around the X axis.

Refer to Fig. 15(a). The revolving body 30C includes a revolving body revolving part 32C, a protrusion 33C, and a second retainer part 34C. The protrusion 33C protrudes outward from an outer surface of the revolving body revolving part 32C and is inserted in the revolving body insertion hole 20Cc. The second retainer part 34C keeps the protrusion 33C from slipping out of the revolving body insertion hole 20Cc.

### Detector

Refer to Fig. 15(a). The detector 40A includes a gyroscope sensor 50A (see Fig. 9), which determines the angular velocity around the X axis. The gyroscope sensor 50A outputs an electrical signal corresponding to the angular velocity, and the electrical signal is then input to a controller 13A.

The supporter 20C has the flexibility of being able to bend in the vertical direction. Vibration of the supporter 20C in the vertical direction causes the supporter 20C to vibrate in a manner so as to bend entirely in the up-and-down direction. The revolving body 30C can thus revolve, with the gyroscope sensor 50A being fixed to the revolving body 30C. The vibrometer 10C capable of providing information about vibration through the adoption of a new approach is provided accordingly.

Arithmetic computations for determining the physical quantities of the vibrator Vi on the basis of the information about the angular velocity of the revolving body 30C may be performed in an appropriate manner. For example, arithmetic expressions or maps describing the relationship between the angular velocity of the revolving body 30C and the velocity of the vibrator Vi may be derived on the basis of a theory, by simulation calculation, and/or by experiment. Similarly, arithmetic expressions or maps describing the relationship between the integral of the angular velocity and the displacement of the vibrator Vi may be derived. AI technology may be used to derive the arithmetic expressions, to create the maps, or to determine the physical quantities of the vibrator Vi. It is not required that these physical quantities be determined by the vibrometer 10C. The vibrometer 10C may simply determine whether the vibrator Vi is vibrating in the up-and-down direction.

The revolving body 30C is disposed between the two ends (between the end 20Ca and the end 20Cb) of the supporter 20C. More specifically, the revolving body 30C is closer to one of the fixed holders 11C than to the midpoint between the two ends (between the end 12Cc and the end 12Cd) of the supporter 20C. This arrangement enables an increase in the possible angular range of revolution of the revolving body 30C with its axis of revolution extending in the horizontal direction.

The gyroscope sensor 50A is disposed within the revolving body 30C. The gyroscope sensor 50A will be cushioned against external impact accordingly. That is, the vibrometer 10C of high durability is provided.

The vibrometer disclosed herein is not limited to the embodiments described above and may be implemented in various forms. The following describes some modification examples of the vibrometer.

The first embodiment has described a detector including two gyroscope sensors. Alternatively, the detector in the first embodiment may include only a gyroscope sensor configured to determine the angular velocity around the X axis. Still alternatively, the detector in the first embodiment may include only a gyroscope sensor configured to determine the angular velocity around the Y axis.

The second embodiment has described a detector including only one gyroscope sensor. Alternatively, the detector in the second embodiment may include a gyroscope sensor configured to determine the angular velocity around the X axis and a gyroscope sensor configured to determine the angular velocity around the Y axis. A vibrator may undergo detection using these gyroscope sensors such that information about vibration in the front-and-rear direction and information about vibration in the left-and-right direction are provided.

The vibrometers according to the respective embodiments may be configured to detect vibration in another direction. For example, the vibrometers according to the second to fourth embodiments each may be disposed in a manner so as to vibrate in a horizontal direction. Detection of vibration in the horizontal direction may thus be rendered possible. In place of the force of gravity, a magnetic force or the force of a spring may be exerted on the revolving body and/or the force-exerting member when necessary. Incidentally, the revolving body and/or the force-exerting member may be brought back into the initial position by using manpower instead of using a magnetic force or the force of a spring.

While embodiments have been described above in which a detector includes a substrate and one or more gyroscope sensors, the detector may include one or more gyroscope sensors only.

While embodiments have been described above in which a vibrator includes a controller configured to obtain, by calculation, information about vibration of a vibrator and to transmit the information an external apparatus by way of a wireless communicator, the vibrometer may include an interconnection extending outward from the controller and connected directly to the external apparatus.

While embodiments have been described above in which a controller is disposed within a revolving body, the controller may be disposed outside the revolving body.

While embodiments have been described above in which a detection unit and an arithmetic unit included in a controller of a vibrometer are clearly distinguishable from each other, the detection unit and the arithmetic unit may be indistinguishable from each other. For example, the arithmetic unit may perform the function of the detection unit, thus obviating the need for the detection unit. The same goes for the configuration of the controller in the first embodiment; that is, the first vibration unit and the second vibration unit may be indistinguishable from each other, the first detection unit and the second detection unit may be indistinguishable from each other, and the first arithmetic unit and the second arithmetic unit may be indistinguishable from each other.

### Reference Signs List

10, 10A, 10B, 10C vibrometer
11A stopper part
11B first elastic body
12B second elastic body
13Ac arithmetic unit
15B, 15C force-exerting member
20A, 20B, 20C supporter
22B guide part
30, 30A, 30B, 30C revolving body
31 first revolving body
31a curved surface
31c reference portion
31A shaft
32 second revolving body
32A revolving body revolving part
40, 40A detector
50, 50A, 50B gyroscope sensor
60 first gyroscope sensor
70 second gyroscope sensor
Li vibrator
Sp placement surface

## Claims

1. A vibrometer capable of detecting vibration of a vibrator having a placement surface and vibrating horizontally in a predetermined direction, the vibrometer comprising:
a revolving body having an outer surface including a curved surface that is curved outward when viewed in a direction along a predetermined axis, the revolving body being capable of rolling in the predetermined direction on the placement surface in such a manner that the curved surface comes into contact with the placement surface, the predetermined axis forming an angle with the predetermined direction; and
a gyroscope sensor that is fixed to the revolving body and is capable of determining an angular velocity around the predetermined axis, wherein
when viewed in the direction along the predetermined axis, the curved surface is shaped such that a portion of the curved surface at a greater distance along the curved surface from a reference portion within the curved surface is farther from a center of gravity of an assembly including the revolving body and members that roll together with the revolving body.

2. The vibrometer according to Claim 1, wherein the gyroscope sensor is disposed within the revolving body.

3. The vibrometer according to Claim 1 or 2, wherein when viewed in the direction along the predetermined axis, the gyroscope sensor is farther than a midpoint of the revolving body from the reference portion, with the midpoint being located in the midsection of the revolving body in a direction from the reference portion toward the center of gravity.

4. The vibrometer according to any one of Claims 1 to 3, wherein at least part of the curved surface including the reference portion is a region of constant curvature when viewed in the direction along the predetermined axis.

5. A vibrometer, comprising:
a supporter;
a revolving body that is supported by the supporter in a manner so as to be capable of revolving around a predetermined axis of revolution and is disposed in such a manner that an assembly including the revolving body and members that revolve together with the revolving body has a center of gravity located away from the predetermined axis of revolution when viewed in a direction along the predetermined axis of revolution;
a gyroscope sensor that is fixed to the revolving body and is capable of determining an angular velocity around the predetermined axis of revolution; and
a stopper part that limits a possible angular range of revolution of the revolving body to less than 135°.

6. A vibrometer, comprising:
a supporter;
a revolving body that is supported by the supporter in a manner so as to be capable of revolving around a predetermined axis of revolution and is disposed in such a manner that an assembly including the revolving body and members that revolve together with the revolving body has a center of gravity located away from the predetermined axis of revolution when viewed in a direction along the predetermined axis of revolution;
a gyroscope sensor that is fixed to the revolving body and is capable of determining an angular velocity around the predetermined axis of revolution;
a stopper part that sets a limit to a possible angular range of revolution of the revolving body; and
an arithmetic unit that calculates, from the angular velocity determined by the gyroscope sensor, a velocity at which a predetermined portion of the revolving body shifts in a predetermined direction, wherein
when viewed in the direction along the predetermined axis of revolution, the possible angular range is asymmetrical with respect to a straight line being orthogonal to the predetermined direction and passing through the predetermined axis of revolution.

7. A method for detecting vibration of a vibrator capable of vibrating in a vertical direction, the method comprising fixing a vibrometer to the vibrator, wherein
the vibrometer includes
a supporter,
a revolving body that is supported by the supporter in a manner so as to be capable of revolving around a predetermined axis of revolution and is disposed in such a manner that an assembly including the revolving body and members that revolve together with the revolving body has a center of gravity located away from the predetermined axis of revolution when viewed in a direction along the predetermined axis of revolution,
a gyroscope sensor that is fixed to the revolving body and is capable of determining an angular velocity around the predetermined axis of revolution, and
a lower stopper with which the revolving body comes into contact when the revolving body revolves in such a manner that a tip of the revolving body shifts downward, the lower stopper being configured to keep the tip of the revolving body from reaching a site directly below the predetermined axis of revolution and to restrict revolution of the revolving body.

8. A vibrometer, comprising:
a first elastic body having a first end and a second end in a direction in which the first elastic body extends, the first elastic body between the first and second ends being wound in a helical shape;
a revolving body fixed to the second end of the first elastic body;
a second elastic body having a third end and a fourth end in a direction in which the second elastic body extends, the third end being fixed the revolving body; and
a gyroscope sensor that is fixed to the revolving body and is capable of determining an angular velocity around an axis of revolution extending in a direction from the first end toward the fourth end, wherein
the second elastic body between the third end and the fourth end is wound in a helical shape winding opposite in direction to the helical shape of first elastic body, and
the fourth end of the second elastic body is capable of shifting relative to the first end of the first elastic body.

9. The vibrometer according to Claim 8, further comprising a force-exerting member that is fixed to the fourth end of the second elastic body and exerts a force on the first elastic body and the second elastic body in the direction from the first end of the first elastic body toward the fourth end of the second elastic body.

10. The vibrometer according to Claim 9, further comprising a supporter that holds the first elastic body and is fixed to a vibrator, wherein
the supporter includes a guide part that guides the force-exerting member in the direction from the first end toward the fourth end.

11. A vibrometer, comprising:
a supporter fixed to a vibrator;
a revolving body supported by the supporter; and
a gyroscope sensor that is fixed to the revolving body and is capable of determining an angular velocity, wherein
the supporter has flexibility of being able to bend in a vertical direction in a manner so as to cause the revolving body to revolve.

12. The vibrometer according to Claim 11, wherein
the supporter has two ends in a direction in which the supporter extends, each of the two ends of the supporter is fixed to a corresponding one of fixed holders, and
the revolving body is disposed between the two ends of the supporter and is closer to one of the fixed holders than to a midpoint between the two ends of the supporter.
